# EUROPÄISCHE PATENTSCHRIFT

(11) **EP 3 598 077 B1**
(45) Veröffentlichungstag und Bekanntmachung des Hinweises auf die Patenterteilung: **02.09.2020**
(21) Anmeldenummer: 18184720.3
(22) Anmeldetag: 20.07.2018
(51) Int. Cl.: G01D 18/00

(54) **MEHRSCHICHTIGE SIGNALAUSWERTUNG**
MULTILAYER SIGNAL EVALUATION
ÉVALUATION DU SIGNAL À PLUSIEURS COUCHES

(43) Veröffentlichungstag der Anmeldung: 22.01.2020
(73) Patentinhaber: neXenio GmbH, 10117 Berlin (DE)
(72) Erfinder: SCHULTZ, Stephan, 14471 Berlin (DE); MIRTSCHIN, Marvin, 14473 Potsdam (DE); WEIDMANN, Vera, 61476 Kronberg (DE); LOWITZKI, Leon, 10629 Berlin (DE); HENNIG, Patrick, 10437 Berlin (DE); BERGER, Philipp, 10627 Berlin (DE)
(74) Vertreter: Richardt Patentanwälte PartG mbB

(56) Entgegenhaltungen:
- EP-A1- 0 538 739
- EP-A1- 2 264 680
- JP-A- H09 145 403
- JP-A- 2008 276 522
- US-A- 6 078 851

## Beschreibung

Die Erfindung betrifft ein Verfahren zur Signalverarbeitung von Sensorsignalen eines Sensors durch ein mobiles Gerät sowie ein mobiles Gerät zum Ausführen des entsprechenden Verfahrens.

Elektronische Geräte mit Sensorik zum Erfassen der Umgebung sowie zum Erfassen von Zuständen des Geräts sind heutzutage weit verbreitet, beispielsweise in Form von Smartphones. Für eine Auswertung der von der Sensorik erfassten Daten ist es aber notwendig aus einer Mehrzahl von Datenwerten charakteristische Datenwerte oder Muster von Datenwerten zu erkennen. Dies kann sich in der Praxis als schwierig erweisen, insbesondere, wenn das entsprechende Muster nicht oder zumindest nicht vollständig a priori bekannt ist.

Der Erfindung liegt die Aufgabe zugrunde, ein verbessertes Verfahren zur Signalverarbeitung von Sensorsignalen in einem mobilen Gerät zu schaffen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zur Signalverarbeitung von Sensorsignalen eines Sensors durch ein mobiles Gerät. Das Verfahren umfasst ein Bereitstellen einer für einen Status eines physikalischen Objekts charakteristischen Referenzverteilung von Referenzdatenwerten, welche in einem Speicher des mobilen Geräts gespeichert ist. Die Referenzverteilung umfasst eine relative Verteilung der Referenzdatenwerte über eine erste Aufteilung eines vordefinierten Wertebereichs. Die erste Aufteilung des Wertebereichs umfasst eine Mehrzahl von ersten Abschnitten, in welche der Wertebereich unterteilt ist. Die relative Verteilung identifiziert für die einzelnen ersten Abschnitte des Wertebereichs jeweils eine relative Häufigkeit der innerhalb des entsprechenden ersten Abschnitts liegenden Referenzdatenwerte. Dabei bildet die erste Aufteilung eine niedrigste Hierarchiestufe einer Mehrzahl von Hierarchiestufen einer Hierarchie von Aufteilungen des Wertebereichs.

Weitere Hierarchiestufen der Hierarchie werden in dem Speicher des mobilen Geräts bereitgestellt. Die ersten Abschnitte der niedrigsten Hierarchiestufe weisen eine kleinste Abschnittsgröße und die erste Aufteilung damit eine höchste Auflösung des Wertebereichs auf. Die weiteren Aufteilungen weisen mit zunehmender Hierarchiestufe jeweils eine reduzierte Auflösung relative zu der Aufteilung der jeweils vorangehenden Hierarchiestufe auf. Die reduzierten Auflösungen umfassen jeweils Abschnitte mit einer größeren Abschnittsgröße als Abschnitte der jeweils vorangehenden Hierarchiestufe. Die entsprechenden Abschnitte mit größerer Abschnittsgröße resultieren jeweils aus einem Zusammenfassen einer Gruppe benachbarter Abschnitte der jeweils vorangehenden Hierarchiestufe und den entsprechenden Abschnitten mit größerer Abschnittsgröße ist jeweils eine relative Häufigkeit von Referenzdatenwerten zugeordnet, welche aus einer Kombination der relativen Häufigkeiten resultiert, die den Abschnitten der jeweils vorangehenden Hierarchiestufe zugeordnet sind, welche zu dem entsprechenden Abschnitt mit größerer Abschnittsgröße zusammengefasst sind.

Eine Mehrzahl von Datenwerten des physikalischen Objekts wird aus Sensorsignalen des Sensors durch das mobile Gerät erfasst. Die erfassten Datenwerte werden durch das mobile Gerät ausgewertet, wobei das Auswerten für jeden Einzelnen der Datenwerte jeweils umfasst:
o Zuordnen des entsprechenden Datenwerts zu einem der ersten Abschnitte der ersten Aufteilung des Wertebereichs,
o für jede weitere Hierarchiestufe der Hierarchie, jeweils Identifizieren eines Abschnitts der reduzierten Aufteilung des Wertebereichs der entsprechenden weiteren Hierarchiestufe, welcher den ersten Abschnitt umfasst, dem der entsprechende Datenwert zugeordnet ist,
o für den ersten Abschnitt, dem der entsprechende Datenwert zugeordnet ist, sowie für die identifizierten Abschnitte der weiteren Hierarchiestufen, jeweils Bestimmen einer hierarchiestufenspezifischen Wahrscheinlichkeit, dass es sich bei einem Datenwert in dem entsprechenden Abschnitt um einen für den Status des physikalischen Objekts charakteristischen Datenwert handelt, wobei das Bestimmen der hierarchiestufenspezifischen Wahrscheinlichkeiten jeweils unter Verwendung der relativen Häufigkeit der Referenzdatenwerte erfolgt, welche dem entsprechenden Abschnitt zugeordnet ist,
o Bestimmen einer datenwertspezifischen Durchschnittswahrscheinlichkeit unter Verwendung der für den entsprechenden Datenwert bestimmten hierarchiestufenspezifischen Wahrscheinlichkeiten.

Das Auswerten umfasst ferner ein Bestimmen einer Gesamtdurchschnittswahrscheinlichkeit unter Verwendung der datenwertspezifischen Durchschnittswahrscheinlichkeiten der erfassten Datenwerte sowie ein Prüfen, ob es sich bei den erfassten Datenwerten um für den Status des physikalischen Objekts charakteristische Datenwerte handelt unter Verwendung eines vordefinierten Schwellenwerts, mit welchem die Gesamtdurchschnittswahrscheinlichkeit verglichen wird.

Falls es sich um für den Status des physikalischen Objekts charakteristische Datenwerte handelt, umfasst das Verfahren ferner ein Erzeugen eines Bestätigungssignals, dass es sich bei den erfassten Datenwerten um für den Status des physikalischen Objekts charakteristische Datenwerte handelt. Ferner wird die in dem Speicher des mobilen Geräts gespeicherten Referenzverteilung aktualisiert, wobei das Aktualisieren ein Hinzufügen der erfassten Datenwerte zu der gespeicherten Referenzverteilung umfasst.

Ausführungsformen können den Vorteil haben, dass sie es ermöglichen in effizienter und effektiver Weise Sensorsignale zu verarbeiten, d.h. zu bestimmen, ob diese Sensorsignale charakteristisch sind für einen Status eines physikalischen Objekts. Die Verarbeitung bzw. Auswertung der erfassten Datenwerte beruht dabei auf einem Vergleich mit einer Referenzverteilung, wobei der Vergleich unter Verwendung unterschiedlicher Aufteilungen des für die erfassten Datenwerte relevanten Wertebereichs durchgeführt wird. Diese unterschiedlichen Aufteilungen entsprechen unterschiedlichen Auflösungen der Referenzverteilung, da für die unterschiedlichen Aufteilungen jeweils nur die relativen Häufigkeiten der in den einzelnen Abschnitten der entsprechenden Aufteilungen liegenden Referenzdatenwerte berücksichtigt werden. Die unterschiedlichen Aufteilungen bilden dabei eine Hierarchie von Aufteilungen, wobei die Abschnittsbreite mit zunehmender Hierarchiestufe ebenfalls zunimmt. Mit anderen Worten weist die Aufteilung der niedrigsten Hierarchiestufe die größte Anzahl an Abschnitten mit der kleinesten Abschnittsgröße auf, während die Aufteilung der höchsten Hierarchiestufe die kleineste Anzahl an Abschnitten mit der größten Abschnittsgröße aufweist. Mit anderen Worten stellt die Aufteilung der niedrigsten Hierarchiestufe die höchste Auflösung und die Aufteilung der höchsten Hierarchiestufe die niedrigste Auflösung der Referenzverteilung dar. Dabei ist zu beachten, dass die Zuordnung "niedrigste" und "höchste" Hierarchiestufe beliebig ist und lediglich der Identifikation der Aufteilung mit der kleinesten Abschnittsgröße bzw. der Aufteilung mit der größten Abschnittsgröße dient. Anstatt die Zählung der Hierarchiestufen mit der Hierarchiestufe der Aufteilung mit der kleinesten Abschnittsgröße zu beginnen, könnte die Zählung ebenso gut mit der Aufteilung mit der größten Abschnittsgröße beginnen.

Der Vorteil einer Verwendung von unterschiedlichen Aufteilungen liegt darin, dass die Referenzverteilung im Allgemeinen unvollständig ist und lediglich eine Näherung der tatsächlich zugrundeliegenden Verteilung darstellt, welche umso genauer wird, je größer die Anzahl der Referenzdatenwerte ist. Diese Unvollständigkeit führt dazu, dass die Darstellung der Referenzverteilung mit zunehmender Auflösung nicht notwendigerweise präziser wird. Wird eine zu feine Auflösung gewählt, d.h. zu kleine Abschnittsgrößen, so kann dies dazu führen, dass Referenzverteilungen Schwankungen aufweisen, welche von fehlenden Referenzdatenwerten herrühren und kein Charakteristikum des Status des physikalischen Objekts darstellen. Da a priori nicht bekannt ist, welche Auflösung diejenige ist, welche die Referenzverteilung möglichst genau darstellt, ohne durch die zuvor genannten status-unabhängigen Schwankungen beeinträchtigt zu werden, wird vorgeschlagen mehrere unterschiedliche Aufteilungen bzw. Auflösungen gleichzeitig zu berücksichtigen.

Ausführungsformen stellen ein Verfahren bereit, welches eine mehrschichtige Klasseneinteilung zur Ausreißererkennung (engl.: Multi-layer Binning Outlier Detection) ermöglicht. Unter einem Ausreißer wird hier ein erfasster Datenwert aus einem Sensorsignal verstanden, welcher nicht zu der Referenzverteilung passt, d.h. nicht den Erwartungen an einen Datenwert entspricht, welcher charakteristisch für den Status des physikalischen Objekts ist. Eine Ausreißererkennung ermöglicht es zu erkennen, ob es sich bei erfassten Datenwerten Ausreißer handelt, welche für den Status des physikalischen Objekts nicht charakteristisch sind, oder ob es sich bei den erfassten Datenwerten nicht um Ausreißer und diese mithin charakteristisch für den entsprechenden Status sind.

Ausführungsformen ermöglichen es stetig hinzukommende Datenwerte in Echtzeit zu analysieren und Ausreißer aufzudecken. Insbesondere berücksichtigen Ausführungsformen Einschränkungen, wie eine geringe Speicherkapazität und Rechenleistung, welche auf mobilen Geräten, wie etwa Smartphones und Wearables, vorzufinden sind. Die benötigte Speicherkapazität ist gering, da lediglich für die Abschnitte der niedrigsten Auflösung bzw. Hierarchiestufe jeweils die relativen Häufigkeiten gespeichert werden müssen. Aus diesen relativen Häufigkeiten können die relativen Häufigkeiten der anderen Hierarchiestufen hergeleitet werden. Nach Ausführungsformen wird noch die Gesamtzahl der berücksichtigten Referenzdatenwerte gespeichert und bei einem hinzufügen zusätzlicher Datenwerte entsprechen erhöht. Die benötigte Rechenleistung ist gering, da lediglich Wahrscheinlichkeiten basierend auf relativen Häufigkeiten berechnet und die entsprechenden relativen Häufigkeiten gegebenenfalls angepasst werden. Ausführungsformen ermöglichen es somit Datenströme mit zusätzlichen Datenwerten zu klassifizieren und festzustellen, ob diese zusätzlichen Datenwerte einem bisherigen angelernten Datenmuster in Form der Referenzverteilung, welche auf den Datenwerten der bisher erfassten Datenströme bzw. Referenzwerten basieren, entsprechen oder nicht. Somit kann eine binäre Entscheidung getroffen werden, ob die zusätzlichen Datenwerte zu der Referenzverteilung passen. Nach Ausführungsformen wird die Speicherung der Datenwerte sowie die Durchführung der Ausreißererkennung auf dem jeweiligen mobilen Gerät durchgeführt, ohne hierfür auf externe Ressourcen, wie externe Geräte oder externe Datenspeichern, zuzugreifen.

Aus der Statistik ist die Kerndichteschätzung (engl. Kernel Density Estimation, KDE) als statistisches Verfahren zur Schätzung einer Wahrscheinlichkeitsverteilung einer Zufallsvariable bekannt. Hierbei wird davon ausgegangen, dass statistische Phänomene einer bestimmten Wahrscheinlichkeitsverteilung folgen und dass sich diese Verteilung in Stichproben realisiert. In der Realität ist die zugrundeliegende Wahrscheinlichkeitsverteilung häufig unbekannt und es stellt sich somit die Herausforderung aus der Realisation von Stichproben die zugrundeliegende Wahrscheinlichkeitsverteilung identifizieren bzw. zu rekonstruieren.

Eine Kerndichteschätzung stellt ein Verfahren für eine stetige Schätzung der unbekannten Wahrscheinlichkeitsverteilung bereit. Mit anderen Worten handelt es sich bei Kerndichteschätzung um eine gleichmäßig konsistente, stetige Schätzung einer Dichte eines unbekannten Wahrscheinlichkeitsmaßes durch eine Folge von Dichten. Hierzu werden Kerne, d.h. Dichten von ähnlicher Gestalt, verwendetet, welche im Zuge der Kerndichteschätzung abhängig von der Stichprobenrealisation positioniert, skaliert und in Form einer Summe überlagert werden. Bei den entsprechenden Kernen kann es sich beispielsweise um Gaußkerne, Cauchy-Kerne, Picard-Kerne oder Epanechnikov-Kerne handeln. Die Qualität der Approximation der Wahrscheinlichkeitsverteilung ist allerdings stark abhängig von der Wahl der Bandbreite, welche für die Kerne verwendet wird. Soll die Wahl der Bandbreite in Abhängigkeit vom Stichprobenumfang, d.h. unter Berücksichtig zusätzlicher Datenwerte im Falle eines kontinuierlichen Datenstroms, angepasst werden, erfordert dies, dass sämtliche Datenwerte gespeichert werden. Dies führt im Falle mobiler Geräte infolge der schnell anwachsenden zu speichernden Datenmengen zu Probleme mit den begrenzten Speicherressourcen. Ferner kann die numerische Auswertung der Kerndichteschätzung rechenintensiv sein. Dies kann infolge von Verzögerungen aufgrund langwieriger Berechnungen zu Problemen bei kontinuierlichen Datenströmen führen, welcher in Echtzeit auszuwerten sind. Ferner kann eine hierfür notwendige hohe Rechenleistung im Falle mobiler Geräte dazu führen, dass aufgrund von erhöhten Prozessorauslastungen die verbleibenden Ressourcen für parallel auszuführende Prozesse beeinträchtigt werden. Dies kann zu zusätzlichen Verzögerungen führen. Schließlich kann eine hohe Prozessorauslastung im Falle mobiler Geräte mit integrierter, begrenzter Energieversorgung, wie etwa einem Akku, dazu führen, dass die zu Verfügung stehende maximale Betriebsdauer des mobilen Geräts stark eingeschränkt wird.

Ausführungsformen schlagen vor, ein Näherung für die Wahrscheinlichkeitsverteilung zu verwenden, welche auf einer Einteilung in Klassen bzw. in Abschnitte des Wertebereichs beruht. Hierbei werden den einzelnen Klassen bzw. Abschnitten des Wertebereichs jeweils relative Häufigkeiten zugeordnet. Zu illustrativen Zwecken kann eine solche Verteilung von relativen Häufigkeiten beispielsweise durch ein Histogramm dargestellt werden. Ein Histogramm ermöglicht eine effektive und effiziente Näherung der Wahrscheinlichkeitsverteilung, welche sowohl einen geringen Rechenaufwand als auch einen geringen Speicherplatzbedarf aufweist.

Unter einem Histogramm wird hier eine grafische Darstellung einer Häufigkeitsverteilung kardinal skalierter Merkmale verstanden. Datenwerte, welche die Merkmale beschreiben, werden in Klassen (englisch Bins) eingeteilt, welche eine konstante oder variable Breite haben können. Nach Ausführungsformen weisen die Bins eine konstante Breite auf. Hierzu wird ein zu betrachtender Wertebereich in eine Mehrzahl von Anschnitten bzw. Klassen unterteilt. Den Klassen werden jeweils Rechtecke zugeordnet, welche durch ihre Breite, d.h. die Klassenbreite, und ihre Höhe bestimmt sind. Der von Klassenbreite und Höhe des Rechtecks bestimmte Flächeninhalt der Rechtecke gibt jeweils die (relativen oder absoluten) Klassenhäufigkeit der entsprechenden Klasse an. Nach Ausführungsformen werden die relativen Klassenhäufigkeiten betrachtet. Die Höhe der Rechtecke bezeichnet die (relative oder absolute) Häufigkeitsdichte, also die (relative oder absolute) Klassenhäufigkeit dividiert durch die Breite der entsprechenden Klasse.

Ein Histogramm ist somit eine flächenproportionale Darstellung einer Häufigkeit. Die Fläche eines Rechtecks entspricht c·f(xj), wobei f(xj) die relative Klassenhäufigkeit der Klasse j und c einen Proportionalitätsfaktor bezeichnet. Ist c gleich dem Stichprobenumfang, d.h. gleich der Anzahl an berücksichtigten Datenwerten, so ist die Fläche eines jeden Rechtecks gleich der absoluten Klassenhäufigkeit. In diesem Fall handelt es sich um ein absolute Klassenhäufigkeit, welche durch das Histogramm dargestellt wird, in dem die Summe der Flächeninhalte der Rechtecke dem Stichprobenumfang entspricht. Im Falle einer Verwendung von absoluten Klassenhäufigkeiten wächst mithin mit zunehmender Anzahl der berücksichtigten Datenwerte die Summe der Flächeninhalte und damit die Summe der Höhen der Rechtecke. Bei einer Verwendung absoluten Klassenhäufigkeiten nimmt folglich der Speicherbedarf zum Speichern der Klassenhäufigkeiten mit zunehmender Anzahl der berücksichtigten Datenwerte zu, da die Größen der Klassenhäufigkeiten zunehmen.

Werden zur Konstruktion eines Histogramms die relativen Klassenhäufigkeiten, d.h. wie im vorliegenden Fall die relativen Häufigkeiten, verwendet, d.h. c=1, wird das Histogramm als relativ oder normiert bezeichnet. Da die Flächeninhalte der Rechtecke nun den relativen Klassenhäufigkeiten entsprechen, summieren sich die Flächeninhalte in diesem Fall zu Eins. Mit anderen Worten bleibt mit zunehmender Anzahl der berücksichtigten Datenwerte die Summe der Flächeninhalte und damit die Summe der Höhen der Rechtecke konstant. Bei einer Verwendung relativer Klassenhäufigkeiten nimmt somit der Speicherbedarf zum Speichern der Klassenhäufigkeiten mit zunehmender Anzahl der berücksichtigten Datenwerte nicht zu, da die Größen der Klassenhäufigkeiten beschränkt sind, d.h. z.B. kleiner oder gleich eins sind. Nach Ausführungsformen werden relative Klassenhäufigkeiten verwendet.

Eine Konstruktion eines Histogramms umfasst im Allgemeinen ein Aufteilen einer Wertemenge bzw. eines Wertebereichs in Klassen bzw. Abschnitte, welche die Bin-Bereiten festlegen, Bestimmen der absoluten/relativen Klassenhäufigkeiten, Bestimmen der Häufigkeitsdichten der Klassen, und grafisches Darstellen des Histogramms unter Verwendung der für die einzelnen Klassen bestimmten Häufigkeitsdichten. Spiegelt die Klassenhäufigkeit einen relativen Wert wieder, so drückt der entsprechende relative Wert aus, wie viel Prozent der berücksichtigten Datenwerte einer bestimmten Klasse angehören.

Nach Ausführungsformen wird eine Mehrzahl unterschiedlicher Aufteilungen bereitgestellt und für die Klassen bzw. Abschnitte der einzelnen Aufteilungen jeweils die relativen Klassenhäufigkeiten bestimmt. Nach Ausführungsformen erfolgt keine graphische Darstellung in Form von Histogrammen. Nach alternativen Ausführungsformen erfolgt eine graphische Darstellung in Form von ein oder mehreren Histogrammen, zu welchem zwecke auch die Häufigkeitsdichten der Klassen bestimmt werden.

Nach Ausführungsformen sind die Klassen gleich breit, d.h. die Häufigkeitsdichten und absolute bzw. relative Häufigkeiten sind proportional zueinander. Die Höhen der Rechtecke sind in diesem Fall vergleichbar und unter Beachtung der Klassenbreite als Proportionalitätsfaktor interpretierbar als Häufigkeit.

Allerdings sind Histogramm nicht stetig und die Qualität der Näherung hängt von der gewählten Bin-Breite ab. Eine falsche Einteilung der Klassen kann zu einer Fehlinterpretation des Histogramms führen. Für die Festlegung der Anzahl der Klassen bzw. Rechtecke existieren zwar verschiedene Faustregeln, deren Anwendung beruht jedoch auf Voraussetzungen, welche sich im Falle konkreter Anwendungen oftmals nicht erfüllen lassen.

Für eine Auswertung der erfassten Datenwerte, werden diese Klassen bzw. Abschnitte, im Weiteren auch als Bins bezeichnet, gleicher Breite zwischen einem Minimal- und Maximalwert des betrachteten Wertebereichs eingeordnet bzw. der entsprechende Wertebereich in solche Bins gleicher Breite eingeteilt. Für jeden der Bins wird die relative Häufigkeit an Referenzwerten errechnet. Datenwerte, die in Bins mit sehr niedriger Häufigkeit liegen, zählen als Ausreißer, d.h. sind ein Hinweis darauf, dass die entsprechenden Datenwerte mit hoher Wahrscheinlichkeit nicht zu der von den bisherigen Datenwerten, d.h. Referenzwerten, repräsentierten Verteilung gehören. Um eine optimale Bin-Größe bzw. Bin-Breite zu finden, existieren in der Statistik verschiedene Regeln, beispielsweise die Sturges, Freedman-Diaconis und die Scott-Regel. Diese Regeln setzen aber eine Normalverteilung der Datenwerte und eine Speicherung aller der Analyse zu Grunde liegenden Datenwerte voraus.

Ausführungsformen berücksichtigen unterschiedliche Aufteilungen mit unterschiedliche Bin-Größen für die Ausreißererkennung und erfordern mithin keine Normalverteilung der auszuwertenden Datenwerte. Zudem ist die Speicherung der Datenhistorie nicht erforderlich, was sich insbesondere im Falle einer Implementierung auf einem mobilen Gerät mit begrenzten Speicherressourcen als vorteilhaft erweisen kann.

Im Zusammenhang mit Echtzeitdaten erweist sich insbesondere die Skalierbarkeit der Berechnung im Hinblick auf die Datenmenge als ein signifikantes Problem. Die gängigen Ausreißererkennungen betrachten daher nur gleitende Zeitfenster um Ausreißer in Echtzeitdaten zu identifizieren. Gleitende Zeitfenster bedeuten, dass nur Datenwerte, welche innerhalb eines begrenzten Zeitfensters erfasst wurden, als Referenzdaten verwendet werden. Das entsprechende Zeitfenster gleitet mit voranschreitender Zeit mit. Ältere Datenwerte, welche außerhalb des Zeitfensters liegen werden nicht mehr berücksichtigt. Um eine möglichst genaue Klassifizierung aller bisherigen Muster zu erreichen, ist es aber erforderlich alle historischen Datenwerte zu berücksichtigen und nicht nur ein aktuelles gleitendes Zeitfenster. Ausführungsformen können den Vorteil haben, dass sie alle historischen Datenwerte zu berücksichtigen vermögen und nicht nur ein aktuelles gleitendes Zeitfenster, ohne jedoch alle historischen Datenwerte speichern zu müssen. Vielmehr werden die absoluten oder relativen Häufigkeiten der Referenzdatenwerte pro Bin gespeichert. Dabei ist die Zeitkomplexität der Berechnung maximal linear zu der berücksichtigten Datenmenge. Werden die relativen Häufigkeiten der Referenzdatenwerte gespeichert, wird nach Ausführungsformen zusätzlich die Gesamtzahl an Referenzdatenwerten gespeichert.

Bei einer Datenauswertung auf einem mobilen Gerät, ohne Rückgriff auf externe Ressourcen, muss bei der Auswahl des Verfahrens die Speicherkapazitäten und die Rechenleistung berücksichtigt werden. Eine diskrete Häufigkeitsverteilung, etwa in Form eines Histogramms, und benötigt keine komplexen Berechnungen. Allerdings besteht das Problem bei histogramm-basierten Verfahren darin, dass es oftmals schwierig ist, eine optimale Breite für die Bins des Histogramms zuverlässig zu bestimmen. Histogramme, deren Bin-Breiten zu breit oder zu schmal gewählt sind, ermöglichen es nicht die Häufigkeitsverteilung auf einer für eine hinreichend präzise Erkennung von Ausreißern erforderlichen Granularitätsebene zu modellieren. Werden die Bins zu schmal gewählt, können korrekte Datenwerte, als Ausreißer identifiziert werden, falls diese aufgrund einer verhältnismäßig kleinen Abweichung in einen zu einem Hochfrequenz-Bin benachbarten Niederfrequenz-Bin fallen. Auf der anderen Seite können abweichende Datenwerte in Hochfrequenz-Bins fallen, falls die Bins zu breit gewählt werden, und werden daher nicht als Ausreißer identifiziert. Werden Bins schmal gewählt, so ist eine verhältnismäßig große Datenmenge notwendig, um für jeden der Bins eine für die zu erfassende Häufigkeitsverteilung repräsentative Anzahl an Referenzdatenwerten sicherstellen zu können. Mit anderen Worten passt zwischen zwei benachbarte repräsentative Referenzdatenwerte im allgemeinen stets ein Bin, solange die Bin-Breite nur ausreichend klein gewählt wird. Niederfrequenz-Bin bezeichnen Bins mit einer verhältnismäßig geringen Anzahl an Datenwerten, während Hochfrequenz-Bins Bins mit einer verhältnismäßig geringen Anzahl an Datenwerten bezeichnen.

Ein Problem von Histogrammen ist insbesondere eine Darstellung von multivariaten bzw. multidimensionalen Datensätzen, da eine exponentielle wachsende Datenmenge mit einer höheren Anzahl von Dimensionen notwendig ist, um leeren Bins entgegenzuwirken. Gelingt es eine ausreichend große Datenmenge zur Verfügung zu stellen, so stellt wiederum das Speichern einer entsprechend großen bzw. rasch anwachsenden Datenmenge eine weitere Herausforderung dar.

Da die Breite der Bins das Klassifikationsergebnis stark beeinflusst, wird gemäß Ausführungsformen vorgeschlagen mehreren Ebenen von Histogrammen mit einer unterschiedlichen Anzahl von Bins bzw. mehrere Ebenen von unterschiedlichen Aufteilungen des relevanten Wertebereichs vorzusehen. Dies ermöglicht auf den unterschiedlichen Ebenen unterschiedliche Bin-Breiten in die Ausreißererkennung miteinzubeziehen.

Eine tiefere Ebene wird beispielsweise erzeugt, indem jeder einzelne Bin einer unmittelbar vorangehenden höheren Ebene in Kinder geteilt wird. Werden 4 Ebenen und eine Kinderanzahl von jeweils 10 je Bin pro Ebene gewählt, so befinden sich bei 10 Bins in der ersten (höchsten) Ebene, 10² = 100 Bins in der zweiten Ebene, 10³ Bins in der dritten Ebene und 10⁴ Bins in der vierten (niedrigsten) Ebene. Somit steigt die Anzahl der Bins mit zunehmender Anzahl von Ebenen exponentiell an. Nach Ausführungsformen wird eine möglichst geringe Anzahl an Ebenen verwendet und zugleich eine möglichst hohe Klassifikationsgenauigkeit der Datenwerte beibehalten.

Nach Ausführungsformen werden zur Erkennung von Ausreißern alle Ebenen, sowie jeder einzelne Bin berücksichtigt. Nach Ausführungsformen werden die unterschiedlichen Ebenen unterschiedlich gewichtet. Nach Ausführungsformen setzt sich diese Gewichtung, im Folgenden auch als Tiefengewichtung bezeichnet, der einzelnen Ebene zusammen aus der eigenen Tiefe der entsprechenden Ebene und der maximalen Tiefe der Ebenen. Nach Ausführungsformen werden niedrigere Ebenen bzw. höhere Auflösungen der Referenzverteilung geringer gewichtet als höhere Ebenen bzw. niedriger Auflösungen der Referenzverteilung. Beginnt man mit einer nicht zu groben Aufteilung des relevanten Wertebereichs, ist die Wahrscheinlichkeit gering, dass ein Eltern-Bin, welcher aufgrund einer verhältnismäßig geringen Anzahl an Referenzdatenwerten charakteristisch für Ausreißer ist, ein oder mehrere Kinder-Bins umfasst, welche aufgrund einer verhältnismäßig hohen Anzahl an Referenzdatenwerten charakteristisch für valide Datenwerte sind, bei denen es sich nicht um Ausreißer handelt. Beispielsweise ist der Gewichtungsfaktor wᵢ einer i-ten Ebene von maximal N Ebenen gegeben als wᵢ = a·N/i, wobei die höchste Ebene i = 1, die niedrigste Ebene i = N und a ein Faktor zum Anpassen der Gewichtung ist, wie beispielsweise a = 1. Ist die höchste Ebene i = N und die niedrigste Eben i = 1 ist der Gewichtungsfaktor wᵢ einer i-ten Ebene von maximal N Ebenen gegeben als wᵢ = a·i/N, beispielsweise mit a = 1.

Nach Ausführungsformen umfasst eine Gewichtung eines Bins einen Häufigkeitswert des entsprechenden Bins und/oder einen zu erwartenden Häufigkeitswert, welcher beispielsweise von einem Häufigkeitswert des Eltern-Bins abhängt.

Beispielsweise ist die Gewichtung wₓ des Bins x gegeben als wₓ=b·Aₓ/A_{y}, wobei Aₓ die Anzahl der Referenzwerte in dem Bin x (absolute Häufigkeit des Bins x oder relative Häufigkeit des Bins x mal Gesamtzahl an Referenzwerten), A_{y} die Anzahl der Referenzwerte in dem Eltern-Bin y des Bins x (absolute Häufigkeit des Bins y oder relative Häufigkeit des Bins y mal Gesamtzahl an Referenzwerten) und b ein Faktor zum Anpassen der Gewichtung ist, wie beispielsweise b = 1. Der Eltern-Bin y ist derjenige Bin der nächst höheren Ebene bzw. Aufteilung, welcher den Bin x umfasst.

Nach Ausführungsformen umfasst die hierarchiestufenspezifischen Wahrscheinlichkeit eine Gewichtung des betrachteten Bins sowie eine zugehörige Tiefengewichtung des entsprechenden Bins, etwa ein Produkt aus diesen beiden Größen. Nach Ausführungsformen umfasst die datenwertspezifischen Durchschnittswahrscheinlichkeit eines Datenwerts die Summe über alle hierarchiestufenspezifischen Wahrscheinlichkeiten des entsprechenden Datenwerts geteilt durch die Summe der für den entsprechenden Datenwert berücksichtigten Tiefengewichtungen.

Ausführungsformen können den Vorteil haben, dass die Verteilung der Datenwerte über verschiedene Ebenen hinweg in Form diskreter Verteilungswerte, welche beispielsweise ein Histogramm definieren, gespeichert wird. Fällt ein Datenwert in den Bereich eines bestimmten Bins und handelt es sich bei diesem um keinen Ausreißer, wird der Datenwert diesem Bin zugeordnet und der abgespeicherte Bin-Wert (absolute Häufigkeit) erhöht sich um eins bzw. im Falle relativer Häufigkeiten werden die relativen Häufigkeiten der Bins entsprechend angepasst. Nach Ausführungsformen ist somit kein Speichern von Rohdaten notwendig und eine kostengünstige Speicherung der erlangten Informationen wird erreicht. Neu generierte Datenströme können so effizient in die abgespeicherte Verteilung integriert werden.

Nach Ausführungsformen wird im Falle einer absoluten Verteilung bzw. einem Speichern von absoluten Häufigkeiten wird durch ein zeitlich bestimmtes, prozentuales Zurückschneiden der Bins einem Überlaufen entgegengewirkt.

Im Falle einer relativen Verteilung bzw. einem Speichern von relativen Häufigkeiten wird ein solches Zurückschneiden nicht notwendig. Wird die Gesamtzahl der Referenzdatenwerte gespeichert, so kann dieses nach Ausführungsformen durch ein zeitlich bestimmtes Zurückschneiden daran gehindert werden, einen vordefinierten Maximalwert zu überschreiten.

Durch das Integrieren neu erfasster und als richtig klassifizierter, d.h. als zu der Verteilung gehörend identifizierter, Datenströme in die Verteilung kann erreicht werden, dass die Verteilung der Datenwerte sich an die neuen und als richtig klassifizierten Datenströme anpasst, wobei vergangene bzw. seltene Ausreißer entfernt werden. Dadurch wird die im Gerät gespeicherte spezifische Datenverteilung über die Zeit gestärkt, was zur Folge hat, dass die binäre Klassifikation deutlich verbessert werden kann.

Um dem Problem multidimensionaler Datendarstellungen in Histogrammen entgegenzuwirken, wird der Ausreißer auf eindimensionalen Projektionen der Daten berechnet. Das bedeutet, dass die Merkmale individuell behandelt, gespeichert und ausgewertet werden.

Ausführungsformen könnend den Vorteil haben, dass der zum Speichern der Verteilung der Daten für die Ausreißererkennung benötigt Speicherplatz statisch ist. Ebenfalls ist eine normalverteile Datenstruktur nicht notwendig. Die zeitliche Anpassung der abgespeicherten Verteilungswerten kreiert eine dynamische und robuste Ausreißererkennung und kann eine binäre Klassifikation gerätespezifischer Datenmuster bestärken.

Historischen Daten können in unterschiedlichen Auflösungen, d.h. für unterschiedliche Ebenen mit unterschiedlichen Bin-Breiten, gespeichert werden, um für unterschiedliche Szenarien optimal einsetzbar zu sein. Ferner könne Ausführungsformen den Vorteil haben, dass sie einen konstanten Rechenaufwand zur Bearbeitung der eingehenden Echtzeitdatenwerte gewährleisten können.

Nach Ausführungsformen ergibt sich durch eine Verwendung mehrerer Histogramme bzw. Aufteilungen eine effiziente Speicherungsform der gesamten Datenmenge, welche wiederrum eine robuste und dynamische Ausreißererkennung auf mobilen Geräten, wie etwa Smart Devices, ermöglicht.

Ausführungsformen lassen sich insbesondere vorteilhaft einsetzen für eine Ausreißererkennung, welche auf Basis einer begrenzten Speicherkapazität aufgebaut ist. Zum Beispiel kann die Verteilung verhaltensbasierter Datensätze auf einem mobilen Gerät, wie etwa einem Smartphone, hinterlegt und Ausreißer identifiziert werden, die so schnell auf Anomalien in den Bewegungsabläufen hinweisen.

Nach Ausführungsformen wird das Verfahren im Rahmen von einer verhaltensbasierten Authentifizierung eines Nutzers eines mobilen Geräts verwendet. Dabei übernimmt das mobile Geräte eine Authentifizierung bzw. Erkennung seines Nutzers. Das mobile Gerät analysierte Abweichungen neuer Datenwerte von der gespeicherten Verteilung und kann darauf basierend eine Aussage darüber treffen, ob neuen Datenwerte zu der gespeicherten Verteilung passen, welche für einen registrierten Nutzer des mobilen Geräts charakteristisch ist. Passen die neuen Datenwerte zu der gespeicherten Verteilung gilt der aktuelle Nutzer des mobilen Geräts für welche die neuen Datenwerte erfasst wurden als authentifiziert. Passen die neuen Datenwerte nicht der gespeicherten Verteilung, so gilt der aktuelle Nutzer nicht als authentifiziert.

Bei einem mobilen Gerät kann es sich beispielsweise um ein mobiles Telekommunikationsgerät, insbesondere ein Smartphone, einen tragbaren Computer wie zum Beispiel einen Laptop oder Palmtop-Computer, einen Personal Digital Assistant oder dergleichen handeln. Ferner kann es sich um beispielsweise um eine Smartwatch oder Smartglasses handeln.

Nach Ausführungsformen handelt es sich bei dem mobilen Gerät um ein mobiles, tragbares Telekommunikationsgerät, ein Fahrzeug oder einen Roboter.

Ausführungsformen können den Vorteil haben, dass das Verfahren in einer Vielzahl unterschiedlicher mobiler Geräte einsetzbar ist. Es benötigt wenig Speicherressourcen, Rechenressourcen und Energieressourcen und mithin insbesondere für den Einsatz in mobilen ressourcenbeschränkten Geräte geeignet ist. So kann es ermöglicht werden anhand der Datenwerte etwa einen Nutzer eines mobiles, tragbares Telekommunikationsgerät oder eines Fahrzeuges zu erkennen. Bei dem Status des physikalischen Objekts handelt es sich somit um einen Nutzungsstatus des entsprechenden mobilen, tragbaren Telekommunikationsgerät oder Fahrzeuges. Ebenso kann eine Person, welche mit einem Roboter interagiert erkannt werden. Bei dem Status des physikalischen Objekts handelt es sich dann um einen Interaktionsstatus des Roboters. Ferner können die Datenwerte charakteristisch für einen Zustand des mobilen, tragbaren Telekommunikationsgeräts, Fahrzeugs oder Roboters sein. Bei dem Status des physikalischen Objekts handelt es sich somit um einen Zustand des mobilen, tragbaren Telekommunikationsgeräts, Fahrzeugs oder Roboters. Ebenso kann es sich bei dem Status des physikalischen Objekts auch um einen Status eines Umgebungsobjekts handeln, welches durch das mobile, tragbare Telekommunikationsgerät, Fahrzeug oder Roboter erfasst wird. Ausführungsformen können beispielsweise im Zuge einer Steuerung eines Fahrzeugs im Zuge autonomen Fahrens zum Einsatz kommen und zum Verarbeiten von Sensorsignalen dienen, welche einen Status des Fahrzeugs oder eines Umgebungsobjekts des Fahrzeugs erfassen. Ferner können Ausführungsformen beispielsweise im Zuge einer autonomen Steuerung eines Roboters zum Einsatz kommen und zum Verarbeiten von Sensorsignalen dienen, welche einen Status des Roboters oder eines Umgebungsobjekts des Roboters erfassen.

Unter einem "Fahrzeug" wird hier ein mobiles Verkehrsmittel verstanden. Ein solches Verkehrsmittel kann beispielsweise dem Transport von Gütern (Güterverkehr), von Werkzeugen (Maschinen oder Hilfsmittel) oder Personen (Personenverkehr) dienen. Fahrzeuge umfassen insbesondere auch motorisierte Verkehrsmittel. Bei einem Fahrzeug kann es sich beispielsweise um ein Landfahrzeug, ein Wasserfahrzeug und/oder ein Luftfahrzeug handeln. Ein Landfahrzeug kann beispielsweise sein: ein Automobil, wie etwa ein Personenkraftwagen, Omnibus oder ein Lastkraftwagen, ein motorbetriebenes Zweirad, wie etwa ein Motorrad, Kleinkraftrad, Motorroller oder Motorfahrrad, ein landwirtschaftlicher Traktor, Gabelstapler, Golfmobil, Autokran. Darüber hinaus kann es sich bei einem Landfahrzeug auch um ein Schienen gebundenes Fahrzeug handeln. Wasserfahrzeug kann beispielsweise sein: ein Schiff oder Boot. Ferner kann ein Luftfahrzeug beispielsweise sein: ein Flugzeug oder Hubschrauber. Unter einem Fahrzeug wird insbesondere auch ein Kraftfahrzeug verstanden.

Nach Ausführungsformen werden die hierarchiestufenspezifischen Wahrscheinlichkeiten der einzelnen Abschnitte beim Bestimmen der datenwertspezifischen Durchschnittswahrscheinlichkeiten mit zunehmender Hierarchiestufe jeweils höher gewichtet.

Ausführungsformen können den Vorteil haben, dass eine Übereinstimmung der Datenwerte bzw. Datenwertverteilung mit einer gröberen Auflösung der Referenzverteilung höher gewichtet wird als eine Übereinstimmung mit einer feineren Auflösung. Dies hat den Vorteil, dass eine Klassifizierung von Datenwerten als Ausreißer aufgrund einer zu feinen Auflösung vermieden werden kann. So ist bei einer feineren Auflösung die Wahrscheinlichkeit höher, dass Datenwerte, welche nahe an Referenzdatenwerten liegen und eigentlich der charakteristischen Referenzverteilung innerhalb der gegebenen Fehlertoleranzen entsprechen, in eine benachbarten Abschnitt fallen mit einer geringen relativen Häufigkeit. Ist ein Datenwert jedoch bei einer gröberen Auflösung als Nicht-Ausreißer klassifiziert, ist die Wahrscheinlichkeit gering, dass derselbe Datenwert bei einer feineren Auflösung als Ausreißer zu klassifizieren ist. Dies gilt insbesondere, wenn die zugrundeliegende Verteilung stetig und die gröbere Auflösung nicht zu grob gewählt ist.

Nach Ausführungsformen handelt es sich bei der charakteristischen Referenzverteilung um eine normalisierte Verteilung.

Ausführungsformen können den Vorteil haben, dass unabhängig von der Anzahl der berücksichtigten Referenzdatenwerte, die den einzelnen Anschnitten zugeordneten relativen Häufigkeiten zwischen Null und Eins liegen. Mit anderen Worten steigt der benötigte Speicherplatz zum Speichern der Referenzverteilung nicht an, ungeachtet der Anzahl der berücksichtigten Referenzdatenwerte. Dies erlaubt es Datenwerte, welche als charakteristisch für den durch die Referenzverteilung bestimmten Zustand des physikalischen Objekts erkannt wurden als zusätzliche Referenzdatenwerte zu der Referenzverteilung hinzuzufügen, ohne ältere Referenzdatenwerte aus Gründen des Speicherplatzbedarfs löschen zu müssen. Somit kann ein fortgesetztes Lernen über einen längeren Zeitraum implementiert und die Referenzverteilung durch fortgesetztes Lernen immer genauer bestimmt werden.

Nach Ausführungsformen umfasst das Bestimmen der hierarchiestufenspezifischen Wahrscheinlichkeiten jeweils ein Bestimmen einer Abweichung der relativen Häufigkeit der Referenzdatenwerte, welche dem für den jeweiligen Datenwert bestimmten Abschnitt der entsprechenden Hierarchiestufe zugeordnet ist, von einer Gleichverteilung der Referenzdatenwerte über alle Abschnitte des Wertebereichs auf der entsprechenden Hierarchiestufe.

Ausführungsformen können den Vorteil haben, dass die Abweichung von der Gleichverteilung ein effizientes Maß für die Aussagekraft der einzelnen Abschnitte für den Status des physikalischen Objekts. Je größer die Abweichung ist, desto charakteristischer ist der entsprechende Abschnitt mit seiner relativen Häufigkeit für den Status des physikalischen Objekts.

Nach Ausführungsformen weisen die Abschnitte, in welche der Wertebereich unterteilt ist, auf derselben Hierarchiestufe jeweils dieselbe Abschnittsgröße auf. Ausführungsformen können den Vorteil haben, dass die einzelnen Abschnitte besser miteinander vergleichbar sind und eine gleichmäßige Auflösung der Referenzverteilung über den gesamten Wertebereich implementiert wird. Ferner können so die von dem mobilen Gerät auszuführenden Berechnungen vereinfacht werden, weshalb weniger Rechenressourcen benötigt werden.

Nach Ausführungsformen umfasst das Erfassen der Datenwerte aus den Sensorsignalen des Sensors ein Verarbeiten von Rohdatenwerten, welche die Sensorsignale bereitstellen. Das Verarbeiten umfasst insbesondere zumindest einen der folgenden Verarbeitungsschritte der Rohdatenwerte: Normalisierung, Signalfilterung, Mittelwertbestimmung, Varianzbestimmung und Merkmalsextraktion.

Ausführungsformen können den Vorteil haben, dass unterschiedliche Typen von Datenwerten bei der Signalverarbeitung berücksichtigt werden können. Insbesondere kann so auf Datenwerte zurückgegriffen werden, welche besonders aussagekräftig für den zu untersuchenden Zustand des physikalischen Objekts sind. Diese Datenwerte sind gegebenenfalls aus den Rohdaten durch einen der zuvor genannten Verarbeitungsschritte zu berechnen.

Nach Ausführungsformen handelt es sich bei dem Sensor um einen Sensor des mobilen Geräts. Ausführungsformen können den Vorteil haben, dass die Signalverarbeitung vollständig auf dem mobilen Gerät ausgeführt werden kann. Insbesondere kann so auch ein Zustand des mobilen Geräts als physikalischen Objekt bestimmt werden. Nach Ausführungsformen handelt es sich bei dem physikalischen Objekt um das mobile Gerät. So kann ein Zustand des physikalischen Objekts, wie etwa ein Nutzungszustand bei einem mobilen, tragbaren Telekommunikationsgerät bestimmt werden. So kann etwa zum Zwecke einer Authentifizierung bestimmt werden, ob das mobile, tragbare Telekommunikationsgerät von einem registrierten Nutzer verwendet wird. Eine solche Authentifizierung kann auf einem Nutzungsverhalten des Nutzers beruhen, welcher das Gerät aktuell nutzt. Insbesondere könne solche verhaltensbasierte Datenwerte erfasst werden, wenn der Nutzer das mobile, tragbare Telekommunikationsgerät mit sich führt, beispielsweise am Körper oder in der Hand trägt.

Nach Ausführungsformen handelt es sich bei dem Status des physikalischen Objekts um einen Nutzungsstatus, welcher charakteristisch für eine Nutzung des physikalischen Objekts durch einen Nutzer ist, der das mobile Gerät bei sich trägt. Datenwerte werden für eine Authentifizierung des Nutzers erfasst und der Nutzer wird durch das mobile Gerät authentifiziert wird, falls es sich bei den erfassten Datenwerten um für eine Nutzung des physikalischen Objekts durch den zu authentifizierenden Nutzer charakteristische Datenwerte handelt. Im Fall einer Authentifizierung handelt es sich bei dem Bestätigungssignal um ein Authentifizierungssignal, durch welches eine erfolgreiche Authentifizierung des zu authentifizierenden Nutzers bestätigt wird.

Ausführungsformen können den Vorteil haben, dass sie eine effektive und effiziente Authentifizierung des Nutzers auf Grundlage seines Verhaltens ermöglichen. Das bedeutet, der Nutzer muss keine speziellen zusätzlichen Handlungen ausführen, um sich zu authentifizieren. Vielmehr wird er durch seine Nutzung des Geräts von diesem automatisch erkannt. Der Nutzer kann sich daher vollständig auf die Nutzung konzentrieren, ohne durch zusätzliche Authentifizierungsmaßnahmen abgelenkt zu werden.

Nach Ausführungsformen handelt es sich bei der Authentifizierung des Nutzers um eine verhaltensbasierte Authentifizierung und bei den erfassten Datenwerten handelt es sich um Datenwerte, welche von einem Verhalten des zu authentifizierenden Nutzers abhängen.

Nach Ausführungsformen handelt es sich bei den erfassten Datenwerten, welche von einem Verhalten des zu authentifizierenden Nutzers abhängen, um Bewegungsdaten des zu authentifizierenden Nutzers. Ausführungsformen können den Vorteil haben, dass bei einem mobilen Gerät, welches der Nutzer mit sich führt, insbesondere am Körper oder in der Hand trägt, der Nutzer anhand seiner Bewegungen erkannt bzw. authentifiziert werden kann, selbst wenn er das Gerät aktuell nicht weiter nutzt.

Bei der erfassten Bewegung kann es sich um eine grobmotorische Bewegung handeln. Eine grobmotorische Bewegung bezeichnet dabei alle Bewegungsfertigkeiten, die ein Mensch mit seinen Gliedmaßen, seinem Rumpf und seinem Kopf erlernen kann. Dabei werden Hauptmuskelgruppen beansprucht. Fertigkeiten der Grobmotorik sind zum Beispiel Gehen, Joggen, Rennen, Hüpfen, Fahrradfahren oder Autofahren. Auch das Bewegen des Armes, um eine Verrichtung, wie beispielsweise ein Heben eines Glases zum Trinken oder Essen, auszuführen, kann ebenso wie eine Armbewegung, um ein Mobiltelefon aus der Tasche zu ziehen, als grobmotorische Bewegung aufgefasst werden. Eine grobmotorische Bewegung kann insbesondere auch eine Hüftbewegung des Nutzers umfassen. Demgegenüber gilt ein Greifen einer Tasse als feinmotorische Bewegung, da die Bewegung zum Greifen mit den Fingern ausgeführt wird und feinere Muskelgruppen beansprucht. Bei einem Sensor zur Erfassung einer grobmotorischen Bewegung kann es sich beispielsweise um ein Beschleunigungssensor, ein Gyroskop, Magnetfeldsensor oder eine Kombination aus diesen handeln. Es ist nicht nur möglich, mit solchen Sensoren die Raumlage des mobilen Geräts, sondern auch Bewegungen desselben aufgrund von grobmotorischen Bewegungen des Nutzers zu erfassen.

Bei der erfassten Bewegung kann es sich ferner um eine feinmotorische Bewegung handeln. Eine feinmotorische Bewegung ist eine Bewegung feiner Muskelgruppen, wie beispielsweise der Muskulatur der Finger. Feinmotorik bezeichnet gezielte und koordinierte Bewegung, beispielsweise von Hand- und/oder Fingermuskulatur, aber auch den Muskeln des Mundes, der Augen und des Gesichtes. Die feinmotorische Bewegung, welche durch einen feinmotorischen Sensor des mobilen Geräts erfasst wird, kann etwa eine bestimmte Bewegung der Finger umfassen. Ein Sensor zur Erfassung einer feinmotorischen Bewegung kann als beispielsweise als optisches System oder als Touchpad bzw. Touchscreen, insbesondere, jedoch ohne darauf beschränkt zu sein, ein resistiver Touchscreen, ein oberflächen-kapazitiver Touchscreen, ein projiziert-kapazitiver Touchscreen oder ein induktiver Touchscreen ausgebildet sein.

Ein jeder Mensch führt diese grobmotorischen und feinmotorischen Bewegungen auf seine eigene Art und Weise aus. Somit kann einem bestimmten Nutzer eines mobilen Geräts ein ganz bestimmtes, charakteristisches grobmotorisches und/oder feinmotorisches Bewegungsprofil zugeordnet werden. Ein solches Bewegungsprofil kann in Form einer Referenzverteilung von Referenzdatenwerten bereitgestellt werden bzw. angenähert werden. Anhand dieses Bewegungsprofils ist der Nutzer identifizierbar bzw. authentifizierbar. Die durch den Bewegungssensor erfassten Datenwerte werden einem solchen Bewegungsprofil bzw. einer solchen Referenzverteilung im Zuge der Auswertung zugeordnet.

Nach Ausführungsformen umfasst das Erfassen der Datenwerte ein Erfassen von Datenwerten unterschiedlicher Kategorien aus Sensorsignalen einer Mehrzahl von Sensoren. Den unterschiedlichen Kategorien ist jeweils eine kategoriespezifische Referenzverteilung von Referenzdatenwerten der entsprechenden Kategorie mit einem kategoriespezifischen Wertebereiche zugeordnet. Die erfasste Mehrzahl von Datenwerten umfasst für jede der Kategorien jeweils einen kategoriespezifischen Satz von Datenwerten. Für jede der Kategorien werden die datenwertspezifischen Durchschnittswahrscheinlichkeiten der Datenwerte des kategoriespezifischen Satzes von Datenwerten der entsprechenden Kategorie jeweils zu einer kategoriespezifischen Durchschnittswahrscheinlichkeit kombiniert, wobei das Bestimmen der Gesamtdurchschnittswahrscheinlichkeit ein Kombinieren der kategoriespezifischen Durchschnittswahrscheinlichkeiten umfasst.

Ausführungsformen können den Vorteil haben, dass Datenwerte unterschiedlicher Kategorien, d.h. die auf unterschiedlichen Sensormessungen beruhen, effizient und effektiv verwendet werden könne, um einen Zustand des physikalischen Objekts zu bestimmen. So kann der Zustand des physikalischen Objekts beispielsweise zuverlässiger und/oder präziser bestimmt werden, wenn Datenwerte berücksichtigt werden, welche auf unterschiedlichen Sensormessungen durch unterschiedliche Sensoren beruhen.

Ausführungsformen umfassen ein mobiles Gerät mit einem Speicher und einem Prozessor. In dem Speicher des mobilen Geräts ins maschinenlesbare Programminstruktionen gespeichert. Ein Ausführen der maschinenlesbaren Programminstruktionen durch den Prozessor veranlasst den Prozessor dazu das mobile Geräte so zu steuern, dass das mobile Gerät ein Verfahren nach einer der vorangehenden beschriebenen Ausführungsformen des Verfahrens zur Signalverarbeitung von Sensorsignalen eines Sensors des Geräts auszuführt.

Nach Ausführungsformen ist das mobile Gerät dazu konfiguriert ein oder mehrere der zuvor beschriebenen Ausführungsformen des Verfahren auszuführen.

Nach Ausführungsformen ist das mobile Gerät ist dazu konfiguriert mittels programmierbarer Rechenvorschriften unter Verwendung elektronischer Schaltkreise Daten zu verarbeitet. Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Unter einem "Speicher" bzw. "Datenspeicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten verstanden. Ein nichtflüchtiger Speicher kann als nichtänderbarere Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "flüchtigen elektronischen Speicher" wird hier ein Speicher zur vorübergehenden Speicherung von Daten, welcher dadurch gekennzeichnet ist, dass alle Daten nach dem Abschalten der Energieversorgung verloren gehe. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einer "Schnittstelle" bzw. "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist. Unter einer Kommunikationsschnittstelle zur drahtlosen Kommunikation wird eine Kommunikationsschnittstelle, welche zum kontaktlosen Senden und Empfangen von Daten konfiguriert ist. Die Kommunikation kann beispielsweise nach einem RFID- und/oder NFC-Standard, wie etwa Bluetooth, erfolgen. Ferner kann die Kommunikationsschnittstelle zur Kommunikation über ein lokales Funknetz konfiguriert sein, beispielsweise nach einem Standard der IEEE-802.11-Familie und/oder Wi-Fi.

Eine Schnittstelle kann beispielsweise als Funkschnittstelle konfiguriert sein, welche eine Kommunikation über ein digitales zellulares Mobilfunknetzwerk ermöglicht, das nach einem Mobilfunkstandard wie zum Beispiel GSM, UMTS, LTE, CDMA oder einem anderen Standard aufgebaut sein kann

Eine Kommunikation kann im Allgemeinen beispielsweise über ein Netzwerk erfolgen. Unter einem "Netzwerk" wird hier jedes Übertragungsmedium mit einer Anbindung zur Kommunikation verstanden, welche eine Kommunikation zwischen zumindest zwei Computersystemen ermöglicht. Ein Netzwerk kann beispielsweise ein lokales Netzwerk, insbesondere ein Local Area Network (LAN), ein privates Netzwerk, insbesondere ein Intranet, oder ein virtuelles privates Netzwerk (Virtual Private Network - VPN) umfassen. Beispielsweise kann das Computersystem eine Standardfunkschnittstelle zur Anbindung an ein WLAN aufweisen. Ferner kann es sich um ein öffentliches Netzwerk, wie beispielsweise das Internet handeln.

Unter einem "Sensor" wird hier ein Element zum Erfassen von Messdaten verstanden. Messdaten sind Rohdaten, welche physikalische oder chemische Eigenschaften eines Messobjekts, wie beispielsweise Wärmemenge, Temperatur, Feuchtigkeit, Druck, Durchflussmenge, Schallfeldgrößen, Magnetfeldgrößen, Ausrichtung, Helligkeit, Beschleunigung, pH-Wert, lonenstärke, elektrochemisches Potential, und/oder dessen stoffliche Beschaffenheit qualitativ oder quantitativ wiedergeben. Messdaten werden mittels physikalischer oder chemischer Effekte erfasst und in ein elektronisch weiterverarbeitbares elektrisches Signal umgeformt. Ferner können Messdaten Zustände und/oder Zustandsänderung von elektronischen Geräten durch Außeneinflüsse und/oder in Folge einer Benutzung durch einen Nutzer wiedergeben.

Im Weiteren werden Ausführungsformen der Erfindung mit Bezugnahme auf die Zeichnungen näher erläutert. Es zeigen:
- Figuren 1: schematische Flussdiagramme eines exemplarischen Verfahren zur Signalverarbeitung,
- Figur 2: ein schematisches Blockdiagramm einer Ausführungsform einer mehrstufigen hierarchischen Aufteilung eines Wertebereichs,
- Figuren 3: schematische Diagramme von Referenzverteilungen und
- Figur 4: ein schematisches Blockdiagramm eines exemplarischen mobilen Geräts.

Elemente der nachfolgenden Ausführungsformen, die einander entsprechen, werden mit denselben Bezugszeichen gekennzeichnet.

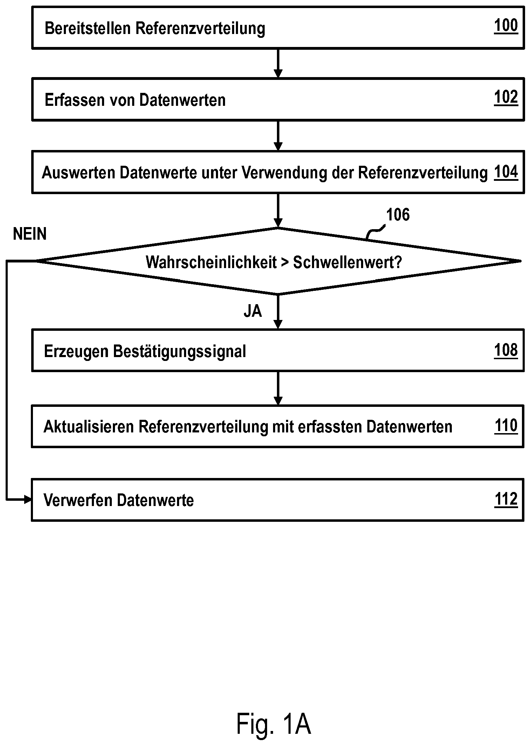

Figur 1A zeigt ein schematisches Flussdiagramm eines exemplarischen Verfahren zur Signalverarbeitung. In Block 100 wird eine für einen Status eines physikalischen Objekts charakteristischen Referenzverteilung von Referenzdatenwerten bereitgestellt. Diese Referenzverteilung ist beispielsweise im Speicher eines mobilen Geräts gespeichert, welches das Verfahren ausführt. Die Referenzverteilung wird mit einer Mehrzahl von Auflösungen über einen Wertebereich bereitgestellt. Jeder Auflösung ist eine Aufteilung des Wertebereichs in eine aufteilungsspezifische Anzahl an Abschnitten mit einer aufteilungsspezifischen Abschnittsgröße zu geordnet. Für jede dieser Aufteilungen spezifiziert die Referenzverteilung eine relative Verteilung, welche die einzelnen Abschnitte des Wertebereichs jeweils eine aufteilungsspezifische relative Häufigkeit der innerhalb des entsprechenden Abschnitts liegenden Referenzdatenwerte identifiziert. Nach Ausführungsformen sind die Aufteilungen hierarchisch ausgebildet, wobei die Aufteilung der niedrigsten Hierarchiestufe die größte Anzahl an Abschnitten aufweist und die Auflösung der höchsten Hierarchiestufe die kleinste Anzahl an Abschnitten. Dabei entsprechen Abschnitte einer höheren Hierarchiestufe jeweils einer Gruppe von Abschnitten einer niedrigeren Hierarchiestufe mit einer Mehrzahl von Abschnitten. Dabei ist den Abschnitten der höheren Hierarchiestufe jeweils eine relative Häufigkeit von Referenzdatenwerten zugeordnet, welche aus einer Kombination der relativen Häufigkeiten resultiert, die den Abschnitten Gruppe von Abschnitten er niedrigeren der Hierarchiestufe zugeordnet sind.

In Block 102 wird eine Mehrzahl von Datenwerten des physikalischen Objekts durch das mobile Gerät aus Sensorsignalen eines Sensors erfasst. Dabei kann es sich um Sensorrohdaten oder Datenwerte handeln, welche aus einer Verarbeitung der Sensorrohdaten resultieren. Die Verarbeitung der Sensorrohdaten umfasst beispielsweise eine Normalisierung, Signalfilterung, Mittelwertbestimmung, Varianzbestimmung und/oder Merkmalsextraktion. Bei dem Sensor handelt es sich beispielsweise um einen Sensor des mobilen Geräts.

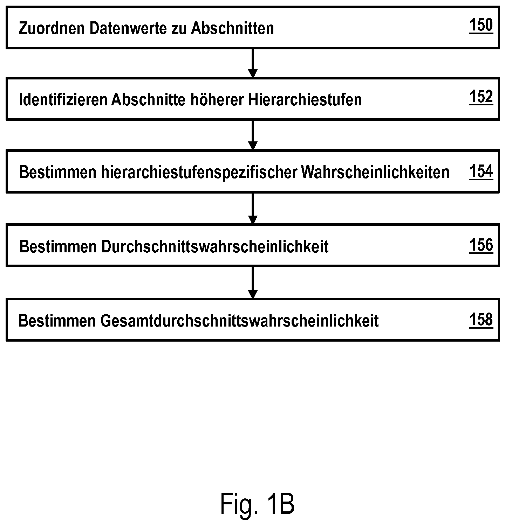

In Block 104 werden die erfassten Datenwerte durch das mobile Gerät unter Verwendung der Referenzverteilung ausgewertet. Die Auswertung der erfassten Datenwerte wird in Figur 1B genauer beschrieben. Hierbei wird eine Gesamtdurchschnittswahrscheinlichkeit dafür bestimmt, dass es sich bei den erfassten Datenwerten um für den Status des physikalischen Objekts charakteristische Datenwerte handelt. In Block 106 wird geprüft, ob die Gesamtdurchschnittswahrscheinlichkeit einen vordefinierten Schwellenwert überschreitet. Überschreitet die Gesamtdurchschnittswahrscheinlichkeit den vordefinierten Schwellenwert, handelt es sich bei den erfassten Datenwerten um für den Status des physikalischen Objekts charakteristische Datenwerte.

Falls es sich um für den Status des physikalischen Objekts charakteristische Datenwerte handelt, wird in Block 108 ein Bestätigungssignal erzeugt, welches bestätigt, dass es sich bei den erfassten Datenwerten um für den Status des physikalischen Objekts charakteristische Datenwerte handelt. In Block 110 wird die in dem Speicher des mobilen Geräts gespeicherten Referenzverteilung mit den erfassten Datenwerten aktualisiert. Das Aktualisieren umfasst dabei ein Hinzufügen der erfassten Datenwerte zu der gespeicherten Referenzverteilung. Falls es sich bei den erfassten Datenwerten nicht um für den Status des physikalischen Objekts charakteristische Datenwerte handelt, werden die erfassten Datenwerte in Block 112 verworfen.

Figur 1B zeigt ein schematisches Flussdiagramm einer exemplarischen Auswertung der einzelnen erfassten Datenwerte des Blocks 104 der Figur 1A. In Block 150 wird der entsprechende Datenwert zu einem der Abschnitte der Auflösung der niedrigsten Hierarchiestufe des Wertebereichs zugeordnet. In Block 152 wird für jede weitere Hierarchiestufe der Hierarchie, jeweils ein Abschnitts der reduzierten Auflösungen des Wertebereichs identifiziert, welcher den ersten Abschnitt der niedrigsten Hierarchiestufe umfasst, dem der entsprechende Datenwert zugeordnet ist. In Block 154 wird für die in den Blöcken 150 und 152 identifizierten Abschnitte jeweils eine hierarchiestufenspezifische Wahrscheinlichkeit dafür bestimmt, dass es sich bei einem Datenwert in dem entsprechenden Abschnitt um einen für den Status des physikalischen Objekts charakteristischen Datenwert handelt. Das Bestimmen der hierarchiestufenspezifischen Wahrscheinlichkeiten erfolgt dabei jeweils unter Verwendung der relativen Häufigkeit der Referenzdatenwerte erfolgt, welche dem entsprechenden Abschnitt zugeordnet ist. In Block 156 wird eine datenwertspezifische Durchschnittswahrscheinlichkeit unter Verwendung der für den entsprechenden Datenwert in Block 154 bestimmten hierarchiestufenspezifischen Wahrscheinlichkeiten bestimmt. In Block 158 wird aus den datenwertspezifische Durchschnittswahrscheinlichkeiten der erfassten Datenwerte eine Gesamtdurchschnittswahrscheinlichkeit dafür bestimmt, dass es sich bei den erfassten Datenwerten um für den Status des physikalischen Objekts charakteristische Datenwerte handelt.

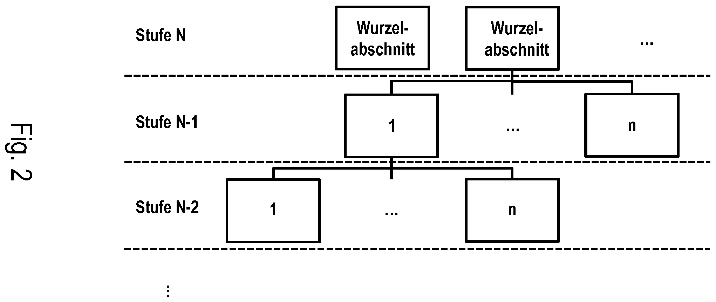

Figur 2 zeigt ein schematisches Blockdiagramm einer Ausführungsform einer mehrstufigen hierarchischen Aufteilung eines Wertebereichs. Auf einer höchsten Hierarchiestufe N von N Hierarchiestufen wird der Wertebereich in m Wurzelabschnitte aufgeteilt. Die Hierarchiestufe N entspricht einer geringsten Auflösung der Referenzverteilung. Mit abnehmender Hierarchiestufe nimmt die Auflösung der Referenzverteilung zu. Hierzu werden die Wurzelabschnitte auf der Hierarchiestufe N-1 jeweils in n Teilabschnitte aufgeteilt. Auf der Hierarchiestufe N-2 werden die Teilabschnitte der Hierarchiestufe N-1 jeweils in n Teilabschnitte aufgeteilt und so fort, bis eine niedrigste Hierarchiestufe 1 mit einer höchsten Auflösung der Referenzverteilung erreicht wird. Diese mehrstufige hierarchische Aufteilung eines Wertebereichs erlaubt es die erfassten Datenwerte unter Verwendung einer Mehrzahl von Auflösungen auszuwerten.

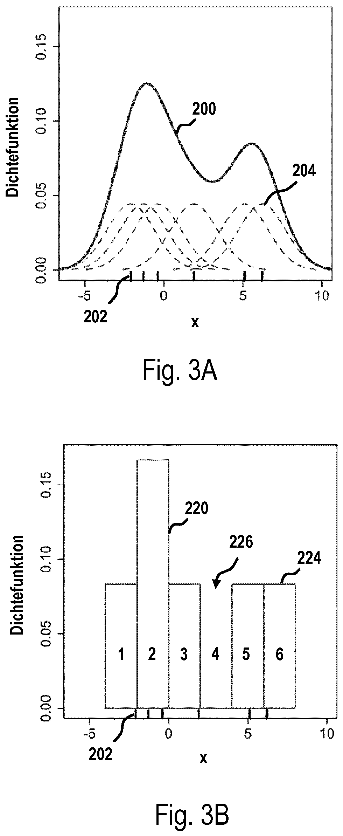

Figuren 3A und 3B zeigen schematische Diagramme von Referenzverteilungen. Figur 3A zeigt eine Referenzverteilungen 200 basierend auf einer Kerndichteschätzung für eine Mehrzahl von Referenzdatenwerten 202. Hierzu wird für jeden Referenzdatenwert 202 jeweils ein Kerne 204, d.h. Dichten von ähnlicher Gestalt, berechnet. Bei den entsprechenden Kernen kann es sich beispielsweise um Gaußkerne, Cauchy-Kerne, Picard-Kerne oder Epanechnikov-Kerne handeln. Die Kerne 204 der Referenzdatenwerte 202 werden in Form einer Summe überlagert, woraus die Referenzverteilungen 200 resultiert. Diese Kerndichteschätzung stellt eine kontinuierliche, stetige Schätzung der Referenzverteilungen 200 bereit. Die Verwendung einer solchen Kerndichteschätzung zur Bestimmung der Referenzverteilung kann in der Praxis jedoch einen hohen Rechenaufwand und eine hohe Speicherkapazität erfordern.

Figur 3B zeigt eine Referenzverteilungen 220 basierend auf einer diskreten Näherungsverteilung in Form eines Histogramms gezeigt. Das Histogramm stellt eine diskrete Schätzung der Referenzverteilungen 220 bereit. Der Wertebereich wird hierzu in Abschnitte, sogenannte Bins, unterteil. In Figur 3B sind dies beispielsweise sechs Bins. Im Gegensatz zur Kerndichteschätzung werden die Referenzdatenwerte 202 im Falle des Histogramms abschnittsweise summiert. Diese abschnittsweisen Summen werden jeweils als Rechtecke 224 dargestellt, wobei die Fläche der Rechtecke jeweils einer relativen Häufigkeit angibt, welche der Summe der Referenzdatenwerte in dem entsprechenden Abschnitt entspricht. Umfasst ein Abschnitt keine Referenzdatenwerte, wie beispielsweise Abschnitt 4 in Figur 3B, so findet sich dort eine Lücke 226 ohne Rechteck. Die Güte der Näherung der Referenzverteilung 220 in Form eines Histogramms hängt maßgeblich von der Wahl der Breite der Bins bzw. Abschnitte ab. Die optimale Breite kann dabei für unterschiedliche Referenzverteilungen variieren. Da die Referenzverteilung a priori nicht bekannt ist, sondern vielmehr unter Verwendung der Referenzdatenwerte 202 mithilfe des Histogramms angenähert werden soll, ist a priori nicht bestimmbar, welche Abschnittsbreite für einen konkreten Fall optimal ist. Dieses Defizit kann durch eine Berücksichtigung einer Mehrzahl unterschiedlicher Abschnittsbreite behoben werden, wodurch eine bessere Durchschnittsnäherung erzielt werden kann. Mit anderen Worten wird für jede der Stufen der Figur 2 eine diskrete Näherungsverteilung gemäß Figur 3B verwendet. Im Zuge der Auswertung wird ein Durchschnitt der Ergebnisse für die unterschiedlichen Näherungen gebildet.

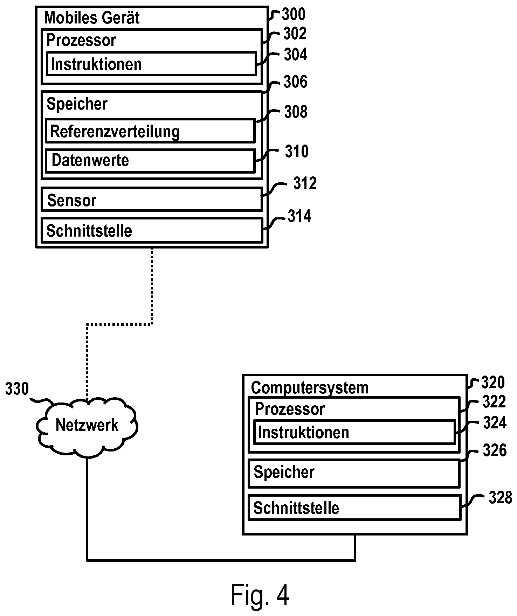

Figur 4 zeigt ein schematisches Blockdiagramm eines exemplarischen mobilen Geräts 300. Das mobile Gerät 300 umfasst einen Prozessor 302, eine Speicher 306, ein oder mehrere Sensoren 312 und eine Kommunikationsschnittstelle 314. Der Prozessor 302 für maschinenlesbare Programminstruktionen 304, wodurch der Prozessor 302 dazu veranlasst wird das mobile Gerät 300 so zu steuern, dass es ein Verfahren zur Signalverarbeitung von Sensorsignalen der ein oder mehrere Sensoren 312 ausführt. Beispielsweise führt das mobile Gerät 300 das Verfahren der Figuren 1A und 1B aus. Hierzu wird eine in dem Speicher 306 gespeicherte Referenzverteilung 308 von Referenzdatenwerten verwendet, welche charakteristisch für einen Status eines physikalischen Objekts ist. Bei diesem physikalischen Objekt handelt es sich beispielsweise um das mobile Gerät 300 selbst oder ein anderes physikalisches Objekt in der Umgebung des mobilen Geräts 300. Im Zuge des Ausführens des Verfahrens wird eine Mehrzahl von Datenwerten 310 aus Sensorsignalen der ein oder mehrere Sensoren 312 des mobilen Geräts 300 erfasst. Diese Datenwerten 310 werden durch Vergleich mit der Referenzverteilung 308 ausgewertet. Dabei wird eine Wahrscheinlichkeit dafür berechnet, dass es sich bei den erfassten Datenwerten 310 um für den Status des physikalischen Objekts charakteristische Datenwerte handelt. Falls es sich bei den erfassten Datenwerten 310 um für den Status des physikalischen Objekts charakteristische Datenwerte handelt, wird ein Bestätigungssignal erzeugt. Bei dem Status handelt es sich beispielsweise um einen Nutzungszustand. Mit anderen Worten wird geprüft, ob die erfassten Datenwerte 310 charakteristisch für eine ordnungsgemäße Nutzung des mobilen Geräts 300 und/oder eine Nutzung durch einen registrierten Nutzer ist. Diese Prüfung erfolgt beispielsweise zur Authentifizierung des Nutzers des mobilen Geräts 300. In diesem Fall handelt es sich bei dem Bestätigungssignal, um ein Authentifizierungssignal. Das Authentifizierungssignal kann intern zur Authentifizierung des Nutzers gegenüber dem mobilen Gerät 300 selbst bzw. einer von dem mobilen Gerät 300 ausgeführten Anwendung oder Programm verwendet werden. Alternativ kann das Authentifizierungssignal zur Authentifizierung des Nutzers über die Kommunikationsschnittstelle an ein weiteres Computersystem 320 gesendet werden. Dies kann direkt oder über ein Netzwerk 330 erfolgen. Sind die erfassten Datenwerte 310 charakteristisch für den Status des physikalischen Objekts, so werden sie zum Aktualisieren der in dem Speicher 306 des mobilen Geräts 300 gespeicherten Referenzverteilung 310 verwendet.

Das Bestätigungssignal, etwa in Form eines Authentifizierungssignals, wird beispielsweise über ein Netzwerk 330 an ein weiteres Computersystem 320 gesendet. Das Computersystem 320 umfasst einen Prozessor 322, einen Speicher 324 und eine Kommunikationsschnittstelle 328. Das Computersystem 320 empfängt das Bestätigungssignal über das Netzwerk 330 und die Kommunikationsschnittstelle 328. Das Bestätigungssignal kann von dem Computersystem 320 angefragt worden sein oder von dem mobilen Gerät 300 eigenveranlasst an das Computersystem 320 gesendet werden. Auf einen Empfang des Bestätigungssignals hin führt der Prozessor des Computersystem 320 beispielsweise Programminstruktionen 324 aus, für deren Ausführung das Bestätigungssignal, etwa als Authentifizierungssignal zum Authentifizieren eines Nutzers des mobilen Geräts 300, eine Voraussetzung ist. Ferner kann das Computersystem 320 beispielsweise eine Schließanlage einer Zugangskontrollvorrichtung steuern, welche einen Zugang zu einem begrenzten physikalischen Bereich beschränkt. Ein Ausführen der Programminstruktionen 324 führt beispielsweise dazu, dass die Schließanlage so angesteuert wird, dass der authentifizierte Nutzer Zugang zu dem begrenzten physikalischen Bereich über die Zugangskontrollvorrichtung erhält. Bei der Zugangskontrollvorrichtung handelt es sich beispielsweise um eine Tür, eine Drehtür, eine Schleuse, eine Schranke, ein Drehkreuz etc. Nach weiteren Ausführungsformen führt ein Ausführen der Programminstruktionen 324 dazu, dass dem Nutzer ein Dienst durch das Computersystem 320 bereitgestellt wird. Beispielsweise erhält der Nutzer zugriff auf Ressourcen, welche das Computersystem 320 bereitstellt, etwa gespeicherte Daten.

### Bezugszeichenliste

- 200: Referenzverteilung
- 202: Referenzdatenwert
- 204: Kern
- 220: Referenzverteilung
- 224: Rechteck
- 226: Lücke
- 300: mobiles Gerät
- 302: Prozessor
- 304: Programminstruktionen
- 306: Speicher
- 308: Referenzverteilung
- 310: Datenwerte
- 312: Sensor
- 314: Kommunikationsschnittstelle
- 320: Computersystem
- 322: Prozessor
- 324: Programminstruktionen
- 326: Speicher
- 328: Kommunikationsschnittstelle
- 330: Netzwerk

## Patentansprüche

1. Verfahren zur Signalverarbeitung von Sensorsignalen eines Sensors (312) durch ein mobiles Gerät (300), wobei das Verfahren umfasst:
• Bereitstellen einer für einen Status eines physikalischen Objekts charakteristischen Referenzverteilung (220, 308) von Referenzdatenwerten (202), welche in einem Speicher (306) des mobilen Geräts (300) gespeichert ist, wobei die Referenzverteilung (220, 308) eine relative Verteilung der Referenzdatenwerte (202) über eine erste Aufteilung eines vordefinierten Wertebereichs umfasst, wobei die erste Aufteilung des Wertebereichs eine Mehrzahl von ersten Abschnitten umfasst, in welche der Wertebereich unterteilt ist, wobei die relative Verteilung für die einzelnen ersten Abschnitte des Wertebereichs jeweils eine relative Häufigkeit der innerhalb des entsprechenden ersten Abschnitts liegenden Referenzdatenwerte (202) identifiziert und wobei die erste Aufteilung eine niedrigste Hierarchiestufe einer Mehrzahl von Hierarchiestufen einer Hierarchie von Aufteilungen des Wertebereichs bildet,
• Bereitstellen weiterer Hierarchiestufen der Hierarchie in dem Speicher (306) des mobilen Geräts (300), wobei die ersten Abschnitte der niedrigsten Hierarchiestufe eine kleinste Abschnittsgröße und die erste Aufteilung damit eine höchste Auflösung des Wertebereichs aufweisen, wobei die weiteren Aufteilungen mit zunehmender Hierarchiestufe jeweils eine reduzierte Auflösung relative zu der Aufteilung der jeweils vorangehenden Hierarchiestufe aufweisen, wobei die reduzierten Auflösungen jeweils Abschnitte mit einer größeren Abschnittsgröße umfassen als Abschnitte der jeweils vorangehenden Hierarchiestufe, wobei die entsprechenden Abschnitte mit größerer Abschnittsgröße jeweils aus einem Zusammenfassen einer Gruppe benachbarter Abschnitte der jeweils vorangehenden Hierarchiestufe resultieren und wobei den entsprechenden Abschnitten mit größerer Abschnittsgröße jeweils eine relative Häufigkeit von Referenzdatenwerten (202) zugeordnet ist, welche aus einer Kombination der relativen Häufigkeiten resultiert, die den Abschnitten der jeweils vorangehenden Hierarchiestufe zugeordnet sind, welche zu dem entsprechenden Abschnitt mit größerer Abschnittsgröße zusammengefasst sind,
• Erfassen einer Mehrzahl von Datenwerten (310) des physikalischen Objekts aus Sensorsignalen des Sensors (312) durch das mobile Gerät (300),
• Auswerten der erfassten Datenwerte (310) durch das mobile Gerät (300), wobei das Auswerten für jeden Einzelnen der Datenwerte (310) jeweils umfasst:
o Zuordnen des entsprechenden Datenwerts (310) zu einem der ersten Abschnitte der ersten Aufteilung des Wertebereichs,
o für jede weitere Hierarchiestufe der Hierarchie, jeweils Identifizieren eines Abschnitts der reduzierten Aufteilung des Wertebereichs der entsprechenden weiteren Hierarchiestufe, welcher den ersten Abschnitt umfasst, dem der entsprechende Datenwert (310) zugeordnet ist,
o für den ersten Abschnitt, dem der entsprechende Datenwert (310) zugeordnet ist, sowie für die identifizierten Abschnitte der weiteren Hierarchiestufen, jeweils Bestimmen einer hierarchiestufenspezifischen Wahrscheinlichkeit, dass es sich bei einem Datenwert (310) in dem entsprechenden Abschnitt um einen für den Status des physikalischen Objekts charakteristischen Datenwert (310) handelt, wobei das Bestimmen der hierarchiestufenspezifischen Wahrscheinlichkeiten jeweils unter Verwendung der relativen Häufigkeit der Referenzdatenwerte (202) erfolgt, welche dem entsprechenden Abschnitt zugeordnet ist,
o Bestimmen einer datenwertspezifischen Durchschnittswahrscheinlichkeit unter Verwendung der für den entsprechenden Datenwert (310) bestimmten hierarchiestufenspezifischen Wahrscheinlichkeiten,
wobei das Auswerten ferner ein Bestimmen einer Gesamtdurchschnittswahrscheinlichkeit umfasst unter Verwendung der datenwertspezifischen Durchschnittswahrscheinlichkeiten der erfassten Datenwerte (310) sowie ein Prüfen, ob es sich bei den erfassten Datenwerten (310) um für den Status des physikalischen Objekts charakteristische Datenwerte (310) handelt unter Verwendung eines vordefinierten Schwellenwerts, mit welchem die Gesamtdurchschnittswahrscheinlichkeit verglichen wird, falls es sich um für den Status des physikalischen Objekts charakteristische Datenwerte (310) handelt, umfasst das Verfahren ferner:
• Erzeugen eines Bestätigungssignals, dass es sich bei den erfassten Datenwerten (310) um für den Status des physikalischen Objekts charakteristische Datenwerte (310) handelt,
• Aktualisieren der in dem Speicher (306) des mobilen Geräts (300) gespeicherten Referenzverteilung (220, 308), wobei das Aktualisieren ein Hinzufügen der erfassten Datenwerte (310) zu der gespeicherten Referenzverteilung (220, 308) umfasst.

2. Verfahren nach Anspruch 1, wobei es sich bei dem mobilen Gerät (300) um ein mobiles, tragbares Telekommunikationsgerät, ein Fahrzeug oder einen Roboter handelt.

3. Verfahren nach einem der vorangehenden Ansprüche, wobei die hierarchiestufenspezifischen Wahrscheinlichkeiten der einzelnen Abschnitte beim Bestimmen der datenwertspezifischen Durchschnittswahrscheinlichkeiten mit zunehmender Hierarchiestufe jeweils höher gewichtet werden.

4. Verfahren nach einem der vorangehenden Ansprüche, wobei es sich bei der charakteristischen Referenzverteilung (220, 308) um eine normalisierte Verteilung handelt.

5. Verfahren nach einem der vorangehenden Ansprüche, wobei das Bestimmen der hierarchiestufenspezifischen Wahrscheinlichkeiten jeweils ein Bestimmen einer Abweichung der relativen Häufigkeit der Referenzdatenwerte (202), welche dem für den jeweiligen Datenwert (310) bestimmten Abschnitt der entsprechenden Hierarchiestufe zugeordnet ist, von einer Gleichverteilung der Referenzdatenwerte (202) über alle Abschnitte des Wertebereichs auf der entsprechenden Hierarchiestufe umfasst.

6. Verfahren nach einem der vorangehenden Ansprüche, wobei die Abschnitte, in welche der Wertebereich unterteilt ist, auf derselben Hierarchiestufe jeweils dieselbe Abschnittsgröße aufweisen.

7. Verfahren nach einem der vorangehenden Ansprüche, wobei das Erfassen der Datenwerte (310) aus den Sensorsignalen des Sensors (312) ein Verarbeiten von Rohdatenwerten umfasst, welche die Sensorsignale bereitstellen, wobei das Verarbeiten insbesondere zumindest einen der folgenden Verarbeitungsschritte der Rohdatenwerte umfasst: Normalisierung, Signalfilterung, Mittelwertbestimmung, Varianzbestimmung und Merkmalsextraktion.

8. Verfahren nach einem der vorangehenden Ansprüche, wobei es sich bei dem Sensor (312) um einen Sensor (312) des mobilen Geräts (300) handelt.

9. Verfahren nach einem der vorangehenden Ansprüche, wobei es sich bei dem physikalischen Objekt um das mobile Gerät (300) handelt.

10. Verfahren nach Anspruch 9, wobei es sich bei dem Status des physikalischen Objekts um einen Nutzungsstatus handelt, welcher charakteristisch für eine Nutzung des physikalischen Objekts durch einen Nutzer ist, welcher das mobile Gerät (300) bei sich trägt, wobei Datenwerte (310) für eine Authentifizierung des Nutzers erfasst und der Nutzer durch das mobile Gerät (300) authentifiziert wird, falls es sich bei den erfassten Datenwerten (310) um für eine Nutzung des physikalischen Objekts durch den zu authentifizierenden Nutzer charakteristische Datenwerte (310) handelt, wobei es sich im Fall einer Authentifizierung bei dem Bestätigungssignal um ein Authentifizierungssignal handelt, durch welches eine erfolgreiche Authentifizierung des zu authentifizierenden Nutzers bestätigt wird.

11. Verfahren nach Anspruch 10, wobei es sich bei der Authentifizierung des Nutzers um eine verhaltensbasierte Authentifizierung handelt, wobei es sich bei den erfassten Datenwerten (310) um Datenwerte (310) handelt, welche von einem Verhalten des zu authentifizierenden Nutzers abhängen.

12. Verfahren nach Anspruch 11, wobei es sich bei den erfassten Datenwerten (310), welche von einem Verhalten des zu authentifizierenden Nutzers abhängen, um Bewegungsdaten des zu authentifizierenden Nutzers handelt.

13. Verfahren nach einem der vorangehenden Ansprüche, wobei das Erfassen der Datenwerte (310) ein Erfassen von Datenwerten (310) unterschiedlicher Kategorien aus Sensorsignalen einer Mehrzahl von Sensoren (312) umfasst, wobei den unterschiedlichen Kategorien jeweils eine kategoriespezifische Referenzverteilung (220, 308) von Referenzdatenwerten (202) der entsprechenden Kategorie mit einem kategoriespezifischen Wertebereiche zugeordnet ist, wobei die erfasste Mehrzahl von Datenwerten (310) für jede der Kategorien jeweils einen kategoriespezifischen Satz von Datenwerten (310) umfasst, wobei für jede der Kategorien die datenwertspezifischen Durchschnittswahrscheinlichkeiten der Datenwerte (310) des kategoriespezifischen Satzes von Datenwerten (310) der entsprechenden Kategorie jeweils zu einer kategoriespezifischen Durchschnittswahrscheinlichkeit kombiniert werden, wobei das Bestimmen der Gesamtdurchschnittswahrscheinlichkeit ein Kombinieren der kategoriespezifischen Durchschnittswahrscheinlichkeiten umfasst.

14. Mobiles Gerät (300) mit einem Speicher (306) und einem Prozessor (302), wobei in dem Speicher (306) des mobilen Geräts (300) maschinenlesbare Programminstruktionen (304) gespeichert sind, wobei ein Ausführen der maschinenlesbaren Programminstruktionen (304) durch den Prozessor (302) den Prozessor (302) dazu veranlasst, das mobile Geräte (300) so zu steuern, dass das mobile Gerät (300) ein Verfahren nach einem der vorangehenden Ansprüche ausführt.

## Claims

1. A method for signal processing of sensor signals of a sensor (312) by a mobile device (300), wherein the method comprises the steps of:
• providing a reference distribution (220, 308) of reference data values (202), which reference distribution is characteristic for a status of a physical object and is stored in a memory (306) of the mobile device (300), the reference distribution (220, 308) comprising a relative distribution of the reference data values (202) over a first partitioning of a predefined value range, the first partitioning of the value range comprising a plurality of first portions into which the value range is divided, the relative distribution for the individual first portions of the value range in each case identifying a relative frequency of the reference data values (202) lying within the corresponding first portion, and the first partitioning forming a lowest hierarchy level of a plurality of hierarchy levels of a hierarchy of partitionings of the value range;
• providing further hierarchy levels of the hierarchy in the memory (306) of the mobile device (300), the first portions of the lowest hierarchy level having the smallest portion size and the first partitioning thus having the highest resolution of the value range, the further partitionings with increasing hierarchy level each having a reduced resolution relative to the partitioning of the preceding hierarchy level, the reduced resolutions each comprising portions with a greater portion size as compared to portions of the preceding hierarchy level, the corresponding portions with greater portion size each resulting from an amalgamation of a group of adjacent portions of the preceding hierarchy level, and the corresponding portions with greater portion size each being assigned a relative frequency of reference data values (202) which results from a combination of the relative frequencies assigned to the portions of the preceding hierarchy level which are amalgamated to form the corresponding portion of greater portion size;
• detecting, by the mobile device (300), a plurality of data values (310) of the physical object from sensor signals of the sensor (312);
• analysing the detected data values (310) by the mobile device (300), with the analysis for each of the individual data values (310) in each case comprising:
o assigning the corresponding data value (310) to one of the first portions of the first partitioning of the value range;
o for each further hierarchy level of the hierarchy, identifying a portion of the reduced partitioning of the value range of the corresponding further hierarchy level which comprises the first portion to which the corresponding data value (310) is assigned;
o for the first portion to which the corresponding data value (310) is assigned, and for the identified portions of the further hierarchy levels, determining a hierarchy level-specific likelihood that a data value (310) in the corresponding portion is a data value (310) characteristic for the status of the physical object, the hierarchy level-specific likelihoods being determined in each case with use of the relative frequency of the reference data values (202) that is assigned to the corresponding portion;
o determining a data value-specific average likelihood with use of the hierarchy level-specific likelihoods determined for the corresponding data value (310),
the analysis also comprising a determination of an overall average likelihood with use of the data value-specific average likelihoods of the detected data values (310) and a checking of whether the detected values (310) are data values (310) characteristic for the status of the physical object with use of a predefined threshold value, with which the overall average likelihood is compared,
if the values are data values (310) characteristic for the status of the physical object, the method further comprises the steps of:
• generating a confirmation signal, confirming that the detected data values (310) are data values (310) characteristic for the status of the physical object;
• updating the reference distribution (220, 308) stored in the memory (306) of the mobile device (300), the update comprising an addition of the detected data values (310) to the stored reference distribution (220, 308).

2. The method according to claim 1, wherein the mobile device (300) is a mobile, portable telecommunications device, a vehicle, or a robot.

3. The method according to either one of the preceding claims, wherein the hierarchy level-specific likelihoods of the individual portions when determining the data value-specific average likelihoods are weighted more highly with increasing hierarchy level.

4. The method according to any one of the preceding claims, wherein the characteristic reference distribution (220, 308) is a normalised distribution.

5. The method according to any one of the preceding claims, wherein the determination of the hierarchy level-specific likelihoods in each case comprises a determination of a deviation of the relative frequency of the reference data values (202) assigned to the portion of the corresponding hierarchy level determined for the data value (310) in question from a uniform distribution of the reference data values (202) over all portions of the value range at the corresponding hierarchy level.

6. The method according to any one of the preceding claims, wherein the portions into which the value range is divided each have the same portion size at the same hierarchy level.

7. The method according to any one of the preceding claims, wherein the detection of the data values (310) from the sensor signals of the sensor (312) comprises a processing of raw data values which provide the sensor signals, the processing comprising in particular at least one of the following processing steps of the raw data values: normalisation, signal filtering, meanvalue determination, variance determination and feature extraction.

8. The method according to any one of the preceding claims, wherein the sensor (312) is a sensor (312) of the mobile device (300).

9. The method according to any one of the preceding claims, wherein the physical object is the mobile device (300).

10. The method according to claim 9, wherein the status of the physical object is a use status which is characteristic for a use of the physical object by a user who carries the mobile device (300) with him, data values (310) for an authentication of the user being detected and the user being authenticated by the mobile device (300) if the detected data values (310) are data values (310) characteristic for a use of the physical object by the user to be authenticated, the confirmation signal, in the event of an authentication, being an authentication signal by which a successful authentication of the user to be authenticated is confirmed.

11. The method according to claim 10, wherein the authentication of the user is a behaviour-based authentication, the detected data values (310) being data values (310) which are dependent on a behaviour of the user to be authenticated.

12. The method according to claim 11, wherein the detected data values (310) which are dependent on a behaviour of the user to be authenticated are movement data of the user to be authenticated.

13. The method according to any one of the preceding claims, wherein the detection of the data values (310) comprises a detection of data values (310) from different categories of sensor signals from a plurality of sensors (312), the different categories each being assigned a category-specific reference distribution (220, 308) of reference data values (202) of the corresponding category with a category-specific value range, the detected plurality of data values (310) for each of the categories comprising a category-specific set of data values (310), for each of the categories the data value-specific average likelihoods of the data values (310) of the category-specific set of data values (310) of the corresponding category being combined to form a category-specific average likelihood, the determination of the overall average likelihood comprising a combining of the category-specific average likelihoods.

14. A mobile device (300) having a memory (306) and a processor (302), wherein machine-readable program instructions (304) are stored in the memory (306) of the mobile device (300), with execution of the machine-readable program instructions (304) by the processor (302) prompting the processor (302) to control the mobile device (300) so that the mobile device (300) performs a method according to any one of the preceding claims.

## Revendications

1. Procédé permettant le traitement de signal de signaux de capteur d'un capteur (312) par un appareil mobile (300), le procédé comprenant :
• la mise à disposition d'une distribution de référence (220, 308), caractéristique d'un état d'un objet physique, de valeurs de données de référence (202), laquelle est stockée dans une mémoire (306) de l'appareil mobile (300), où la distribution de référence (220, 308) comprend une distribution relative des valeurs de données de référence (202) par le biais d'une première subdivision d'une plage de valeurs prédéfinie, où la première subdivision de la plage de valeurs comprend un grand nombre de premiers segments dans lesquels la plage de valeurs est subdivisée, où la distribution relative pour les premiers segments individuels de la plage de valeurs identifie respectivement une fréquence relative des valeurs de données de référence (202) se situant à l'intérieur du premier segment correspondant et où la première division forme un échelon hiérarchique le plus bas parmi une multiplicité d'échelons hiérarchiques d'une hiérarchie des divisions de la plage des valeurs,
• la mise à disposition de nouveaux échelons hiérarchiques de la hiérarchie dans la mémoire (306) de l'appareil mobile (300), où les premiers segments de l'échelon hiérarchique le plus bas présentent la taille de segment la plus petite et la première division présente ainsi une dispersion plus élevée de la plage de mesures, où les autres divisions avec un échelon hiérarchique en progression présentent une dispersion réduite relative par rapport à la division de l'échelon hiérarchique respectivement précédent, où les dispersions réduites comprennent respectivement des segments avec une taille de segment plus grande que des segments de l'échelon hiérarchique respectivement précédent, où les segments correspondants avec des tailles de segment plus grandes résultent respectivement d'une union d'un groupe de segments voisins de l'échelon hiérarchique respectivement précédent et où les segments correspondants avec une taille de segment plus grande se voient associée respectivement une fréquence relative de valeurs de données de référence (202), laquelle fréquence résulte d'une combinaison des fréquences relatives qui sont associées aux segments de l'échelon hiérarchique respectivement précédent, lesquelles sont rassemblées dans le segment correspondant avec une taille de segment plus grande,
• la détection d'une multiplicité de valeurs de données (310) de l'objet physique à partir de signaux de capteur du capteur (312) par l'appareil mobile (300),
• l'exploitation des valeurs de données (310) détectées par l'appareil mobile (300), où l'exploitation pour chacune des valeurs de données (310) individuelle comprend respectivement :
∘ l'association de la valeur de donnée (310) correspondante à l'un des premiers segments de la première division de la plage de valeurs,
∘ pour chaque nouvel échelon hiérarchique de la hiérarchie, l'identification respective d'un segment de la subdivision réduite de la plage de valeurs du nouvel échelon hiérarchique correspondant, lequel comprend le premier segment auquel est associée la valeur de donnée (310) correspondante,
∘ pour le premier segment, auquel est associée la valeur de donnée (310) correspondante, ainsi que pour les segments identifiés des autres échelons hiérarchiques, respectivement la détermination d'une probabilité spécifique à l'échelon hiérarchique que, pour une valeur de donnée (310) dans le segment correspondant, il s'agit d'une valeur de donnée (310) caractéristique pour l'état de l'objet physique, où la détermination de la probabilité spécifique à l'échelon hiérarchique a lieu respectivement moyennant l'emploi de la fréquence relative des valeurs de données de référence (202), auxquelles le segment correspondant est associé,
∘ la détermination d'une probabilité moyenne spécifique à la valeur de donnée moyennant l'emploi des probabilités spécifiques à l'échelon hiérarchique déterminées pour la valeur de donnée (310) correspondante,
où l'exploitation comprend en outre une détermination d'une probabilité moyenne globale moyennant l'emploi des probabilités moyennes spécifiques aux valeurs de donnée des valeurs de données (310) détectées, ainsi qu'une vérification si, dans le cas des valeurs de donnée (310) détectées, il s'agit de valeurs de donnée (310) caractéristiques de l'état de l'objet physique moyennant l'emploi d'une valeur de seuil prédéfinie avec laquelle la probabilité moyenne globale est comparée,
dans le cas où il s'agit de valeurs de données (310) caractéristiques de l'état de l'objet physique, le procédé comprend en outre :
• la création d'un signal de confirmation que, dans le cas des valeurs de données (310) détectées, il s'agit de valeurs de données (310) caractéristiques de l'état de l'objet physique,
• l'actualisation de la distribution de référence (220, 308) stockée dans la mémoire (306) de l'appareil mobile (300), où l'actualisation comprend un rajout des valeurs de données (310) détectées à la distribution de référence (220, 308) stockée.

2. Procédé selon la revendication 1, dans lequel, dans le cas de l'appareil mobile (300), il s'agit d'un appareil de télécommunication mobile, portable, d'un véhicule ou d'un robot.

3. Procédé selon l'une des revendications précédentes, dans lequel les probabilités spécifiques à l'échelon hiérarchique des segments individuels sont respectivement pondérées plus haut avec un échelon hiérarchique croissant lors de la détermination des probabilités moyennes spécifiques à la valeur de donnée.

4. Procédé selon l'une des revendications précédentes, dans lequel, dans le cas de la distribution de référence (220, 308) caractéristique, il s'agit d'une distribution normalisée.

5. Procédé selon l'une des revendications précédentes, dans lequel la détermination des probabilités spécifiques aux échelons hiérarchique comprend respectivement une détermination d'une déviation de la fréquence relative des valeurs de données de référence (202), laquelle est associée au segment déterminé pour la valeur de donnée (310) respective de l'échelon hiérarchique correspondant, d'une distribution de comparaison des valeurs de données de référence (202) sur tous les segments de la plage de valeurs sur l'échelon hiérarchique correspondant.

6. Procédé selon l'une des revendications précédentes, dans lequel les segments dans lesquels est subdivisée la plage de valeurs présentent respectivement la même taille de segment sur le même échelon hiérarchique.

7. Procédé selon l'une des revendications précédentes, dans lequel la détection des valeurs de données (310) comprend un travail de traitement de valeurs de données brutes, lesquelles sont mises à disposition par les signaux de capteur, à partir des signaux de capteur du capteur (312), où le travail de traitement comprend en particulier au moins une des étapes de travail des valeurs de données brutes suivantes : une normalisation, un filtrage de signal, une détermination de valeur moyenne, une détermination de variance ou une extraction de caractéristique.

8. Procédé selon l'une des revendications précédentes, dans lequel, dans le cas du capteur (312), il s'agit d'un capteur (312) de l'appareil mobile (300).

9. Procédé selon l'une des revendications précédentes, dans lequel, dans le cas de l'objet physique, il s'agit de l'appareil mobile (300).

10. Procédé selon la revendication 9, dans lequel, dans le cas de l'état de l'objet physique, il s'agit d'un état d'utilisation lequel est caractéristique d'une utilisation de l'objet physique par un utilisateur, lequel transporte l'appareil mobile (300) avec lui, où des valeurs de donnée (310) sont détectées pour une authentification de l'utilisateur et l'utilisateur est authentifié par l'appareil mobile (300), dans le cas où, pour les valeurs de données (310) détectées, il s'agit de valeurs de données (310) caractéristiques pour une utilisation de l'objet physique par l'utilisateur devant être authentifié, où, dans le cas d'une authentification lors d'un signal de confirmation, il s'agit d'un signal d'authentification par lequel une authentification réussie de l'utilisateur devant être authentifié est confirmée.

11. Procédé selon la revendication 10, dans lequel, dans le cas de l'authentification de l'utilisateur, il s'agit d'une authentification basée sur un comportement, dans lequel, dans le cas des valeurs de données (310) détectées, il s'agit de valeurs de données (310), lesquelles dépendent d'un comportement de l'utilisateur devant être authentifié.

12. Procédé selon la revendication 11, dans lequel, dans le cas des valeurs de données (310) détectées, lesquelles dépendent d'un comportement de l'utilisateur devant être authentifié, il s'agit de valeurs de mouvements de l'utilisateur devant être authentifié.

13. Procédé selon l'une des revendications précédentes, dans lequel la détection des valeurs de données (310) comprend une détection de valeurs de données (310) de signaux de capteur de diverses catégories d'une multiplicité de capteurs (312), où une distribution de référence (220, 308) de valeurs de données de référence (202) de la catégorie correspondante est respectivement associée aux différentes catégories avec une des plage de valeurs spécifique à la catégorie, où la multiplicité des valeurs de données (310) détectées pour chacune des catégories comprend respectivement un ensemble de valeurs de données (310) spécifique à une catégorie, où, pour chacune des catégories, les probabilités moyennes spécifiques aux valeurs de données des valeurs de données (310) de l'ensemble spécifique à la catégorie de valeurs de données (310) de la catégorie correspondante sont respectivement combinées pour donner une probabilité moyenne spécifique à une catégorie, où la détermination de la probabilité moyenne globale comprend une combinaison des probabilités moyennes spécifiques aux catégories.

14. Appareil mobile (300) doté d'une mémoire (306) et d'un processeur (302), où des instructions de programme (304) lisibles par machine sont stockées dans la mémoire (306) de l'appareil mobile (300), où une exécution des instructions de programme (304) lisibles par machine par le processeur (302) fait en sorte que le processeur (302) commande l'appareil mobile (300) de telle manière que l'appareil mobile (300) exécute un procédé selon l'une des revendications précédentes.
